# EUROPÄISCHE PATENTSCHRIFT

(11) **EP 2 058 297 B1**
(45) Veröffentlichungstag und Bekanntmachung des Hinweises auf die Patenterteilung: **20.05.2015**
(21) Anmeldenummer: 08168519.0
(22) Anmeldetag: 06.11.2008
(51) Int. Cl.: C07C 233/05, C07C 235/48, C07C 235/60, A23L 1/22, A23C 9/13, A23C 11/10, A23G 9/32, A23G 1/32

(54) **Verwendung von Alkamiden zur Maskierung eines unangenehmen Geschmacks**
Use of alkamides for masking an unpleasant flavor
Procédé de production de profils polymériques organiques

(30) Priorität: 08.11.2007 US 986343 P
(43) Veröffentlichungstag der Anmeldung: 13.05.2009
(73) Patentinhaber: Symrise AG, 37603 Holzminden (DE)
(72) Erfinder: Langer, Kathrin, 37586 Dassel-Hilwartshausen (DE); Ley, Jakob Peter, 37603 Holzminden (DE); Reinders, Gerald, Dr., 37671, Höxter (DE); Kindel, Günter, 37671 Höxter (DE); Krammer, Gerhard, 37603 Holzminden (DE)
(74) Vertreter: Eisenführ Speiser

(56) Entgegenhaltungen:
- EP-A- 1 977 655
- WO-A-2004/000787
- WO-A-2004/043906
- WO-A-2005/096841
- DE-A1-102004 041 496
- US-A1- 2004 202 619
- US-A1- 2006 057 268

## Beschreibung

Die Erfindung betrifft die Verwendung von bestimmten Alkamiden, insbesondere ungesättigten Alkamiden und deren Gemische zur Maskierung oder Verminderung unangenehmer Geschmackseindrücke, insbesondere der Geschmackseindrücke adstringierend, trocken, staubig, mehlig, kalkig und/oder metallisch. Ferner betrifft die Erfindung bestimmte Zubereitungen, die einen wirksamen Gehalt an den bezeichneten Alkamiden oder deren Gemische enthalten.

Nahrungs- oder Genussmittel enthalten häufig verschiedene adstringierend wirkende Stoffe (Adstringentien), die zwar einerseits in Maßen erwünscht und charakteristisch sind (z.B. in Tee/Kaffee, Catechine in Tee oder Chlorogensäure in Kaffee), andererseits den Wert aber auch stark mindern können (z.B. Flavonoidglycoside und Limonoide in Zitrussäften, bitterer/adstringierender Nachgeschmack vieler künstlicher Süßstoffe wie Aspartam oder Saccharin, hydrophobe Aminosäuren und/oder Peptide in Käse, Saponine und Proteine in Sojaprodukten).

Adstringierender Geschmack wird in der Regel durch Fällung von Prolin-reichen Proteinen im Speichel durch Adstringentien, z.B. Metallsalze oder Tannine, verursacht. Der normalerweise als "Schmiermittel" dienende homogene Speichel enthält denaturierte Proteine, die die Gleitfähigkeit herabsetzen und dadurch ein als adstringierend empfundenes Gefühl im Mund hinterlassen (Isabelle Lesschaeve und Ann C. Noble, American Journal of Clinical Nutrition 2005, 81, 330S-335S).

Insbesondere stark fettreduzierte Produkte (z.B. fettreduzierte oder -freie Milchprodukte, insbesondere Joghurt oder Frischkäse, Emulsionsbasierte Systeme wie Mayonnaise) zeigen oft eine ausgeprägte Adstringens und ein reduziertes Mundgefühl.

Gemäß Verordnung EG (Nr. 1924/2006) sind seit dem 1. Juli 2007 als fettarm bezeichnete fettreduzierte Produkte feste Lebensmittel, die nicht mehr als 3 g Fett pro 100 g enthalten, bzw. flüssige Lebensmittel, die nicht mehr als 1,5 g Fett pro 100 g enthalten. Dementsprechend dürfen als fettfrei bezeichnete Lebensmittel nicht mehr als 0,5 g Fett pro 100 g bzw. 100 ml enthalten.

Insbesondere zur Senkung des natürlichen Gehalts an Adstringentien ist dementsprechend oft eine nachträgliche Behandlung nötig, beispielsweise durch einen zu verwerfenden Voraufguss bei grünem Tee zur Entfernung von Catechinen, oder enzymatisch, z.B. Behandlung von Tee mit zersetzenden Enzymen zur Zerstörung der adstringierenden Polyphenole, wie in WO 2003 022,065 oder JP 2007 135,481 beschrieben, oder Einsatz von speziellen Peptidasen bei der Reifung von Käse.

Diese Behandlungen zur Senkung des natürlichen Gehalts an Adstringentien sind belastend für das Produkt, erzeugen Abfallstoffe und bedingen z.B. auch Lösungsmittelreste und andere Rückstände (Enzyme) in den Produkten.

Daher ist es wünschenswert, Stoffe zu finden, die unangenehme Geschmackseindrücke, insbesondere adstringierende, trockene, mehlige, staubige, kalkige und/oder metallische Geschmackseindrücke, in kleinsten Konzentrationen wirkungsvoll unterdrücken, oder zumindest vermindern können.

Besonders wichtig ist die Unterdrückung unangenehmer Geschmackseindrücke auch bei vielen pharmazeutischen Wirkstoffen, da dadurch die Bereitschaft der Patienten, insbesondere bei Kindern, die den Wirkstoff enthaltende Zubereitung oral zu sich zu nehmen, deutlich erhöht werden kann. Viele pharmazeutische Wirkstoffe, beispielsweise Aspirin, Salicin, Paracetamol, Ambroxol oder Chinin, um nur eine sehr kleine Auswahl zur Verdeutlichung zu nennen, haben einen ausgeprägten adstringierenden und/oder metallischen Geschmack und/oder Nachgeschmack

Klassischerweise werden als Gegenmittel für Adstringentien Fettemulsionen verwendet, deren Verwendung in vielen Fällen aber nicht angezeigt ist, so z.B. in fettfreien Getränken oder gesundheitsbewussten fettarmen Produkten.

In JP 2000 287,630 und WO 2006 013,930 wird eine Methode beschrieben, den adstringierenden Geschmack von Polyphenolen in Teegetränken unter Verwendung von Zucker und bestimmten Aminosäuren zu mindern. Dabei werden die Aminosäuren im Bereich von 0,04 bis 0,1 % eingesetzt.

In JP 2001 046,037 wird die Minderung des adstringierenden Geschmacks von Polyphenolen mit Stärke und Proteinen erreicht. Dieses Verfahren birgt jedoch den Nachteil, dass insbesondere Proteine und Stärken großen Einfluss auf die rheologischen Eigenschaften der Produkte haben.

In JP 2003 128,664 wird die Reduktion der Adstringens durch Salzbildung der Polyphenole erreicht Leider wird dadurch in vielen Fällen die Stabilität dieser Verbindungen gemindert und die Oxidationsanfälligkeit derselben gesteigert.

In JP 2004 315,441 wird beschrieben, dass man den adstringierenden Geschmack von Eisensalzen mit speziellen Aminosäuren wie γ-Aminobuttersäure reduzieren kann. Durch den notwendigen Einsatz extrem hoher Konzentrationen (1 % und mehr) erhält das Produkt bzw. die Zubereitung jedoch einen sauren Geschmack.

DE 10 2004 041 496 A1 beschreibt Hydroxybenzoesäureamide und deren Verwendung zur Maskierung von bitterem Geschmack.

Spezielle Zucker wie Palatinose, auch in Kombination mit Süßstoffen, wurden zur Maskierung der Adstringens von Sojagetränken vorgeschlagen (WO 2004 062,385), allerdings sind auch hier sehr große Mengen erforderlich. In WO 2005 016,031 werden nichtreduzierende Disaccharide wie Trehalose als Adstringens-Maskierer vorgeschlagen. In JP 2004 337,132 wird die Maskierung mit Cyclofructanen beschrieben, die die adstringierenden Stoffe durch Komplexierund maskieren. Gemäß JP 2005 145,933 sind größere Konzentrationen (> 0,1 %) Pektin oder Alginate ebenfalls in der Lage, die Adstringens von Polyphenolen z.B. aus Traubenkernextrakten zu reduzieren. Gallat-Catechine, wie sie z.B. in Grüntee vorkommen, wurden ebenfalls mit dieser Methode maskiert (N. Hayashi, T. Ujihara und K. Kohata, Biosci. Biotechnol. Biochem. 2005, 69 (7), 1306-1310).

Teilweise werden auch Süßstoffe zur Reduktion der Adstringens eingesetzt, wie z.B. in JP 2007 135,481 beschrieben. Dabei erhält man aber grundsätzlich nur süße Applikationen.

Bei den oben erwähnten, bekannten Verfahren besteht neben den bereits genannten Nachteilen regelmäßig ein weiterer Nachteil darin, dass die Maskierungsmittel in erheblichen Mengen (>0,05 %-Bereich) eingesetzt werden sollten, was zu Kosten- und im Falle der polymeren Kohlenhydrate oder Proteine Anwendungsproblemen führen kann.

Es war die primäre Aufgabe der vorliegenden Erfindung, (a) Stoffe zu finden, die in sehr geringen Mengen zur Maskierung oder Verminderung des unangenehmen Geschmackseindrucks unangenehm schmeckender Stoffe geeignet sind (und vorzugsweise insbesondere einen Adstringens-maskierenden Effekt gegen eine Vielzahl von Adstringentien zeigen), (b) breit anwendbar sind, (c) leicht zugänglich sind und (d) im Idealfall natürlich vorkommen.

Im Folgenden werden entsprechende Stoffe beschrieben, die sämtliche der genannten Eigenschaften aufweisen.

Dementsprechend werden zur Lösung der genannten Aufgabe
- einzelne Alkamide
   und/oder
- eine Mischung umfassend oder bestehend aus zwei oder mehr unterschiedlichen Alkamiden
   zum Maskieren oder Vermindern des unangenehmen Geschmackseindrucks eines unangenehm schmeckenden Stoffes verwendet. Dabei sind das einzelne Alkamid bzw. eines, mehrere oder sämtliche der Alkamide in der Mischung ausgewählt aus der Gruppe bestehend aus 2E,4E-Decadiensäure-N-isobutylamid (trans-Pellitorin); 2E,4Z-Decadiensäure-N-isobutylamid (cis-Pellitorin); 2Z,4Z-Decadiensäure-N-isobutylamid; 2Z,4E-Decadiensäure-N-isobutylamid; 2E,4E-Decadiensäure-N-([2S]-2-methylbutyl)amid; 2E,4E-Decadiensäure-N-([2S]-2-methylbutyl)amid; 2E,4E-Decadiensäure-N-([2R]-2-methylbutylamid); 2E,4Z-Decadiensäure-N-(2-methylbutyl)amid; 2E,4E-Decadiensäure-N-piperid (Achilleamid); 2E,4E-Decadiensäure-N-piperid (Sarmentin); 2E-Decensäure-N-isobutylamid; 3E-Decensäure-N-isobutylamid; 3E-Nonensäure-N-isobutylamid; 2E,6Z,8E-Decatriensäure-N-isobutylamid (Spilanthol); 2E,6Z,8E-Decatriensäure-N-([2S]-2-methylbutyl)amid (Homospilanthol); 2E,6Z,8E-Decatriensäure-N-([2R]-2-methylbutyl)amid; 2E-Decen-4-insäure-N-isobutylamid; 2Z-Decen-4-insäure-N-isobutylamid; 2E,6Z,8E,10E-Dodecatetraensäure-N-(2-methylpropyl)amid (α-Sanshool); 2E,6Z,8E,10E-Dodecatetraensäure-N-(2-hydroxy-2-methylpropyl)amid (α-Hydroxysanshool); 2E,6E,8E,10E-Dodecatetraensäure-N-(2-hydroxy-2-methylpropyl)amid (γ-Hydroxysanshool); 2E,4E,8Z, 10E,12E-Tetradecapentaensäure-N-(2-hydroxy-2-methylpropyl)amid (γ-Hydroxysanshool); 2E,4E,8E,10E,12E-Tetradecapentaensäure-N-(2-hydroxy-2-methylpropyl)amid (γ-Hydroxyisosanshool); 2E,4E,8Z,10E,12E-Tetradecapentaensäure-N-(2-methyl-2-propenyl)amid (γ-Dehydrosanshool); 2E,4E,8Z,10E,12E-Tetradecapentaensäure-N-(2-methylpropyl)amid (γ-Sanshool); 2E,4E,8Z,11Z-Tetradecatetraensäure-N-(2-hydroxy-2-methylpropyl)amid (Bungeanool); 2E,4E,8Z,11E-Tetradecatetraensäure-N-(2-hydroxy-2-methylpropyl)amid (Isobungeanool); 2E,4E,8Z-Tetradecatriensäure-N-(2-hydroxy-2-methylpropyl)amid (Dihydröbungeanool) und 2E,4E-Tetradecadiensäure-N-(2-hydroxy-2-methylpropyl)amid (Tetrahydrobungeanool).

Im Rahmen eigener Untersuchungen hat sich gezeigt, dass sich für die genannte erfindungsgemäße Verwendung besonders Alkamide eignen, die ausgewählt sind, aus der Gruppe, bestehend aus 2E,4E-Decadiensäure-N-isobutylamid (trans-Pellitorin), 2E,4Z-Decadiensäure-N-isobutylamid (cis-Pellitorin), 2Z,4Z-Decadiensaure-N-isobutylamid, 2Z,4E-Decadiensäure-N-isobutylamid, 2E,4E-Decadiensäure-N-piperid (Achilleamid), 2E,6Z,8E-Decatriensäure-N-isobutylamid (Spilanthol), 2E,6Z,8E-Decatriensäure-N-([2S]-2-methylbutyl)amid (Homospilan-thol), 2E,6Z,8E-Decatriensaure-N-([2R]-2-methylbutyl)amid, 2E,6Z,8E,10E= Dodecatetraensäure-N-(2-methylpropyl)amid (α-Sanshool), 2E,6Z,8E,10E-Dodecatetraensaure-N-(2-hydroxy-2-methylpropyl)amid (α-Hydroxysanshool), 2E,4E,8Z,10E,12E-Tetradecapentaensäure-N-(2-methylpropyl)amid (γ-Sanshool) und 2E,4E,8Z,11Z-Tetradecatetraensäure-N-(2-hydroxy-2-methylpropyl)amid (Bungeanool). Die genannten Alkamide kommen alle natürlich vor.

Die beste Wirkung im Rahmen der erfindungsgemäß wie oben beschriebenen Verwendung und somit die besten Eigenschaften im Sinne der zu lösenden Aufgabe weisen nach eigenen Untersuchungen die folgenden Alkamide auf: 2E,4E-Decadiensäure-N-isobutylamid(trans-Pellitorin) der Formel (1), 2E,4Z-Decadiensäure-N-isobutylamid (cis-Pellitorin) der Formel (2), 2Z,4Z-Decadiensäure-N-isobutylamid der Formel (3) und 2Z,4E-Decadiensäure-N-isobutylamid der Formel (4). Dementsprechend ist eine erfindungsgemäße Verwendung besonders bevorzugt, die dadurch gekennzeichnet ist, dass das Alkamid bzw. die Alkamide jeweils unabhängig voneinander aus der oben genannten Gruppe ausgewählt sind.

Die Verbindungen der Formeln (1), (2), (3) und (4) sind in der folgenden Abbildung noch einmal zur Verdeutlichung aufgeführt:

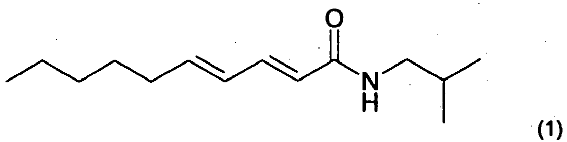

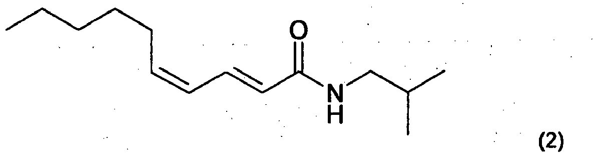

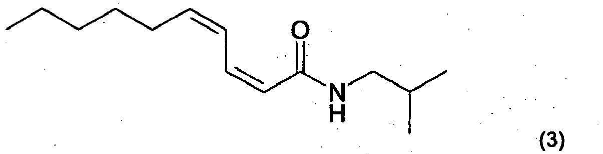

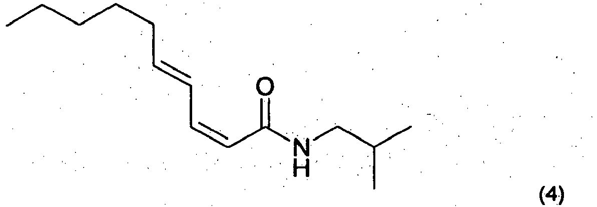

Dementsprechend hat sich in den von uns durchgeführten Untersuchungen gezeigt, dass sich sämtliche der oben genannten Alkamide bzw. Mischungen entsprechend der erfindungsgemäßen Verwendung besonders gut dazu eignen, einen unangenehmen Geschmack eines unangenehm schmeckenden Stoffes oder Stoffgemisches zu maskieren oder zu vermindern. Für die Eignung der Alkamide sowie die entsprechende Auswahl der zu bevorzugenden Alkamide gilt das weiter oben Gesagte.

In weiterführenden Untersuchungen hat sich zudem herausgestellt, dass sich die erfindungsgemäße Verwendung besonders dazu eignet, einen adstringierenden Geschmack bzw. adstringierenden Nachgeschmack eines unangenehm schmeckenden Stoffes oder Stoffgemisches zu maskieren oder zu vermindern. Besonders bevorzugt ist daher eine Verwendung (wie oben definiert) zum Maskieren oder Vermindern eines adstringierenden Geschmacks eines unangenehm schmeckenden Stoffes oder Stoffgemisches mit einem, zwei, drei, vier, fünf oder sämtlichen der Geschmackseindrücke adstringierend, trocken, staubig, mehlig, kalkig oder metallisch.

Im Sinne der vorliegenden Erfindung sind den jeweiligen unangenehmen Geschmackseindrücken gleichermaßen entsprechende durch einen Nachgeschmack bedingte unangenehme Geschmackseindrücke zuzuordnen:

Unangenehm schmeckende Stoffe im Sinne der Erfindung sind daher Stoffe, die adstringierend, trocken, staubig, mehlig, kalkig und/oder metallisch schmecken sowie

Stoffe, die einen entsprechenden stark anhaltenden Nachgeschmack haben.

Ein adstringierender Geschmackseindruck geht dabei oft einher mit den Geschmackseindrücken trocken, staubig, mehlig, kalkig und/oder metallisch.

Die vorgenannten, unangenehm schmeckenden Stoffe können noch weitere, in der Regel nicht unangenehme Geschmacks- und/oder Geruchsqualitäten besitzen. Als weitere, im Sinne der vorliegenden Erfindung nicht unangenehme Geschmacksqualitäten sind z.B. die Eindrücke würzig, umami, süß, salzig, sauer, scharf, kühlend, wärmend, brennend oder kribbelnd zu nennen.

Ausgewählte Beispiele unangenehm schmeckender Stoffe im Sinne der Erfindung sind weiter unten genannt.

Besonders überraschenderweise ergab sich im Rahmen der durchgeführten Untersuchungen die Erkenntnis, dass bei einer wie oben definierten erfindungsgemäßen Verwendung zum Maskieren oder Vermindern des unangenehmen Geschmackseindrucks eines unangenehm schmeckenden Stoffes oder Stoffgemisches die eingesetzte Gesamtmenge an dem oder den Alkamiden nicht ausreicht, den Speichelfluss zu verstärkern. Besonders überraschend war dies für die bevorzugt auszuwählenden Alkamide wie weiter oben definiert. Die erfindungsgemäß zu verwendenden Alkamide bzw. Mischungen, besonders die weiter oben als bevorzugt definierten Alkamide, insbesondere aber trans-Pellitorin der Formel (1), wiesen auch in sehr geringen Konzentrationen, die nicht ausreichen den Speichelfluss zu verstärken, eine sehr starke Wirkung auf, um den unangenehmen Geschmackseindruck von unangenehm schmeckenden Stoffen im Sinne der Erfindung zu maskieren oder zu vermindern. Dementsprechend wird eine weitere bevorzugte erfindungsgemäße Verwendung angegeben, wobei die zum Maskieren oder Vermindern des unangenehmen Geschmackseindrucks eingesetzte Gesamtmenge an dem oder den Alkamiden nicht ausreicht, den Speichelfluss zu verstärken.

Wie bereits erwähnt, betrifft ein Aspekt der vorliegenden Erfindung die Verwendung eines einzelnen Alkamids (wie weiter oben definiert) und/oder einer Mischung umfassend oder bestehend aus zwei oder mehr unterschiedlichen Alkamiden (wie weiter oben definiert) zum Maskieren oder Vermindern eines unangenehmen Geschmackseindrucks eines unangenehm schmeckenden Stoffes oder Stoffgemisches, d. h. als Geschmackskorrigens. Vorzugsweise wird das erfindungsgemäß zu verwendende Alkamid, bzw. die erfindungsgemäß zu verwendende Mischung in einer entsprechenden Zubereitung verwendet. Demnach ist eine erfindungsgemäße Verwendung in einer zur oralen Aufnahme bestimmten pharmazeutischen oder einer der Ernährung, der Mundpflege oder dem Genuss dienenden Zubereitung bevorzugt

Soweit die vorliegende Erfindung eine Verwendung in entsprechenden Zubereitungen betrifft, sind dabei vorzugsweise solche Zubereitungen auszuwählen, die auf Soja basierende Produkte und fettreduzierte (low-fat) Joghurts darstellen. Auf Soja basierende Produkte im Sinne der Erfindung sind insbesondere Produkte aus Sojaprotein oder anderen Sojabohnen-Fraktionen, wie z. B. Sojamilch und daraus gefertigte Produkte, isolierte oder enzymatisch behandeltes Sojaprotein enthaltende Getränke, Sojamehl enthaltende Getränke, Sojalezithin-haltige Zubereitungen, fermentierte Produkte wie Tofu oder Tempe oder daraus gefertigte Produkte und Mischungen mit Fruchtzubereitungen und falkutativ Aromen.

Low-fat Joghurts sind im Sinne fettreduzierter, bzw. fettarmer Produkte zu verstehen und somit den wie weiter oben gemäß der erwähnten EG-Verordnung definierten Produkten zuzuordnen. Für die dabei bevorzugt zu verwendenden Alkamide, sowie die dabei bevorzugt einzusetzende Gesamtmenge des bzw. der Alkamide, gilt das weiter oben Gesagte entsprechend.

Überraschenderweise wurde ferner gefunden, dass die erfindungsgemäß zu verwendenden Alkamide, insbesondere solche die weiter oben als bevorzugt definiert sind und ganz besonders Alkamide der Formel (1), (2), (3) oder (4), in Kombination mit einem oder mehreren Aromastoffen, vorzugsweise Aromastoffen, die einen milchig-sahnigen und Mundfülle gebenden und/oder einen süß-karamelligen Geschmackseindruck vermitteln, besonders gut den unangenehmen Geschmack eines wie oben definierten unangenehm schmeckenden Stoffes maskieren oder vermindern. Diese Kombinationen sind demnach als weitere efindungsgemäße Mischungen anzusehen. Dementsprechend betrifft ein Aspekt der vorliegenden Erfindung die Verwendung von einem einzelnen Alkamid oder von zwei oder mehr unterschiedlichen Alkamiden (wie oben definiert), in Mischung mit einem oder mehreren Aromastoffen, die einen milchig-sahnigen und Mundfülle gebenden und/oder einen süss-karamelligen Geschmackseindruck vermitteln. Für die bevorzugt zu verwendenden Alkamide gilt das weiter oben Gesagte entsprechend. Beispiele bevorzugt zu verwendender Aromastoffe finden sich weiter unten.

Entsprechend sind auch hier erfindungsgemäße Verwendungen in einer zur oralen Aufnahme bestimmten pharmazeutischen oder einer der Ernährung (insbesondere auf Soja basierende Produkte und fettreduzierte (low-fät) Joghurts), der Mundpflege oder dem Genuss dienenden Zubereitung bevorzugt.

Bei den erfindungsgemäßen Verwendungen einer Mischung, die einen oder mehrere Aromastoffe (wie weiter oben definiert) umfasst, ist eine Gesamtmenge an dem oder den erfindungsgemäß zu verwendenden Alkamiden (wie weiter oben definiert) besonders geeignet, die nicht ausreicht, den Speichelfluss zu verstärken.

Besonders überraschend ist, dass die in den erfindungsgemäßen Verwendungen bevorzugt eingesetzten Aromastoffe die positive Eigenschaft aufweisen, die Wirkung des oder der Alkamide (den unangenehmen Geschmackseindruck zu maskieren oder zu vermindern) in synergistischer Art und Weise zu verstärken. Dementsprechend besteht ein weiterer Aspekt der vorliegenden Erfindung in einer wie weiter oben definierten Verwendung, wobei die eingesetzte Menge an dem oder den Aromastoffen die den unangenehmen Geschmackseindruck eines unangenehm schmeckenden Stoffes oder Stoffgemisches maskierende oder vermindernde Wirkung des oder der Alkamide synergistisch verstärkt.

In eigenen Untersuchungen trat eine solche synergistische Verstärkung insbesondere auf, wenn das Gewichtsverhältnis der Gesamtmengen von erfindungsgemäß zu verwendenden Alkamiden und Aromastoffen im Bereich von 1:2 bis 1:200 lag, vorzugsweise im Bereich von 1:3 bis 1:100, besonders bevorzugt im Bereich von 1:5 bis 1:70. Entsprechende Mischungen sind bevorzugt.

In den durchgeführten Untersuchungen hat sich zudem herausgestellt, dass bei den erfindungsgemäßen Verwendungen von Mischungen, die wie weiter oben definiert einen oder mehrere Aromastoffe enthalten, der eine oder die mehreren Aromastoffe, vorzugsweise ausgewählt sind aus der Gruppe bestehend aus Alkohole, Aldehyde, Ketone, organische Säuren, Ester, Lactone, Schwefelkomponenten, Acetale, Phenole, Furane, Pyrane und Pyrazine. Weitere Beispiele bevorzugter Aromastoffe finden sich weiter unten.

Die vorliegende Erfindung betrifft gemäß einem weiteren Aspekt auch die oben definierte Verwendung in einer zur oralen Aufnahme bestimmten pharmazeutischen oder einer der Ernährung (insbesondere auf Soja basierende Produkte und fettreduzierte (low-fat) Joghurts), der Mundpflege oder dem Genuss dienenden Zubereitung.

Wie bereits mehrfach erwähnt betreffen diverse Aspekte der vorliegenden Erfindung die Verwendung eines oder mehrerer Alkamide (wie weiter oben definiert) zur Maskierung oder Verminderung eines unangenehmen Geschmackseindruckes eines unangenehm schmeckenden Stoffes oder Stoffgemisches (wie weiter oben definiert). Wie ebenfalls zuvor erläutert werden die vorgehend beschriebenen Alkamide bzw. Mischungen zur erfindungsgemäßen Verwendung in entsprechenden Zubereitungen eingesetzt.

Die vorliegende Erfindung betrifft dementsprechend gemäß einem weiteren Aspekt Zubereitungen, die neben einem Alkamid und/oder einer Mischung umfassend oder bestehend aus zwei oder mehr unterschiedlichen Alkamiden, wie jeweils weiter oben definiert, vorzugsweise ein oder mehrere unangenehm schmeckende Stoffe enthalten, wobei die Menge des bzw. der unangenehm schmeckenden Stoffe ausreicht, um in einer Vergleichszubereitung, die kein wie oben definiertes Alkamid umfasst aber ansonsten identisch zusammengesetzt ist, als unangenehmer Geschmack wahrgenommen zu werden, und die Menge des bzw. der Alkamide (wie weiter oben definiert) in der Zubereitung ausreicht, um im Vergleich mit der Vergleichszubereitung den unangenehmen Geschmackseindruck des unangenehm schmeckenden Stoffes sensorisch zu maskieren oder zu vermindern. Eine erfindungsgemäße Zubereitung ist eine der Ernährung dienende Zubereitung ausgewählt aus der Gruppe bestehend aus auf Soja basierenden Produkten und fettreduzierten Joghurts.

Für bevorzugte Ausführungen der erfindungsgemäßen Zubereitung trifft das weiter oben Gesagte bezüglich der besonders geeigneten Alkamide, bzw. Mischungen entsprechend zu.

Wie bereits definiert sind unangenehm schmeckende Stoffe im Sinne der Erfindung Stoffe die adstringierend, trocken, staubig, mehlig, kalkig und/oder metallisch schmecken sowie Stoffe die einen entsprechenden stark anhaltenden Nachgeschmack aufweisen, wobei der adstringierende Geschmackseindruck dabei oft mit den Geschmackseindrücken trocken, staubig, mehlig, kalkig und/oder metallisch einhergeht. Das weiter oben Gesagte bezüglich der unangenehm schmeckenden Stoffe gilt hierbei entsprechend.

Folglich sind solche Zubereitungen besonders bevorzugt, die einen oder mehrere unangenehm schmeckende Stoffe (wie oben definiert) umfassen, wobei der oder die unangenehm schmeckenden Stoffe einen, zwei, drei, vier, fünf oder sämtliche der Geschmackseindrücke adstringierend, trocken, staubig, mehlig, kalkig oder metallisch aufweisen.

Wie sich in unseren Untersuchungen herausstellte, sind erfindungsgemäße Zubereitungen besonders bevorzugt, die dadurch gekennzeichnet sind, dass der oder die unangenehm schmeckenden Stoffe ausgewählt sind aus der Gruppe bestehend aus: Xanthinalkaloide, Xanthine (Coffein, Theobromin, Theophyllin und Methylxanthine), Alkaloide (Chinin, Brucin, Strychnin, Nicotin), phenolische Glycoside (z.B. Salicin, Arbutin), Flavonoidglycoside (z.B. Neohespereidin, Hesperidin, Naringin, Quercitrin, Rutin, Hyperosid, Quercetin-3-O-glucosid, Myricetin-3-O-glycoside), Chalcone oder Chalconglycoside (z.B. Phloridzin, Phloridzinxyloside), hydrolisierbare Tannine (Gallus- oder Elagsäureester von Kohlenhydraten, z.B. Pentagalloylglucose, Tanninsäuren), nichthydrolisierbare Tannine (ggfs. galloylierte Catechine, Gallocatechine, Epigaloocatechihe oder Epicatechirie und deren Oligomeren, z.B. Proanthyocyanidine oder Procyanidine, Thearubigenin), Flavone (z.B. Quercetin, Taxifolin, Myricetin), Phenole wie z.B. Salicin, Polyphenole (z.B. γ-Oryzanol, Kaffeesäure oder deren Ester (z. B. Chlorogensäure und Isomere)), terpenoide Bitter- und Gerbstoffe (z.B. Limonoide wie Limonin oder Nomilin aus Zitrusfrüchten, Lupolone und Humolone aus Hopfen, Iridoide, Secoiridoide), Absinthin aus Wermut, Amarogentin aus Enzian, metallische Salze (insbesondere Kalium-, Magnesium- und Calciumsalze, Kaliumchlorid, Kaliumgluconat, Kaliumearbonat, Kaliumsulfat, Kaliumlactat, Kaliumglutamat, Kaliumsuccinat, Kaliummalat, Natriumsulfat, Magnesiumsulfat, Aluminiumsalze, Zinksalze, Zinnsalze, Eisen-(II)-salze, Eisen-(III)-salze, Chrom-(II)-picolinat), pharmazeutische Wirkstoffe (z.B. Fluorchinolon-Antibiotika, Paracetamol, Aspirin, □-Lactam-Antibiotika, Ambroxol, Propylthiouracil [PROP], Guaifenesin), Vitamine (beispielsweise Vitamin H, Vitamine aus der B-Reihe wie Vitamin B1, B2, B6, B12, Niacin, Panthötensäure), Denatoniumbenzoat, Sucraloseoctaacetat, Eisensalze, Aluminiumsalze, Zinksalze, Harnstoff, ungesättigte Fettsäuren, insbesondere ungesättigte Fettsäuren in Emulsionen, bitter/adstringierend schmeckende Aminosäuren (z.B. Leucin, Isoleucin, Valin, Tryptophan, Prolin, Histidin, Tyrosin, Lysin oder Phenylalanin) und bitter oder adstringierend schmeckende Peptide oder Proteine (insbesondere Peptide mit einer Aminosäure aus der Gruppe Leucin, Isoleucin, Valin, Tryptophan, Prolin oder Phenylalanin am N- oder C-Terminus), Saponine, insbes. Sojasaponine, Isoflavonoide (insbes. Genistein, Daidzein, Genistin, Daidzin, deren Glycoside und acylierten Glycoside).

Stoffe, die insbesondere einen adstringierenden, trockenen, staubigen, mehligen, kalkigen und/oder metallischen Nachgeschmack haben, können Aroma- oder Geschmackstoffe mit einem nicht unangenehmen Primärgeschmack (beispielsweise süß, salzig, würzig, sauer) und/oder -geruch sein, und z.B. zur Gruppe der Süßstoffe, Zuckeraustauschstoffe oder der Aromastoffe gehören. Beispielsweise seien genannt: Kaliumsalze (insbesondere Kaliumchlorid, Kaliumgluconat, Kaliumcarbonat, Kaliumsulfat, Kaliumlactat, Kaliumglutamat, Kaliumsuccinat, Kaliummalat), Aspartam, Acesulfam K, Neotam, Superaspartam, Saccharin, Sucralose, Tagatose, Monellin, Stevioside, Rebaudioside, Hernandulcin, Thaumatin, Miraculin, Glycyrrhizin, Glycyrrhetinsäure oder deren Derivate, Cyclamat oder die pharmazeutisch akzeptablen Salze der vorgenannten Verbindungen.

Die oben genannte Auswahl der für die erfindungsgemäßen Zubereitungen besonders geeigneten unangenehm schmeckenden Stoffe, bzw. der Stoffe mit entsprechendem Nachgeschmack, gilt natürlich gleichermaßen für die weiter oben definierten erfindungsgemäßen Verwendungen.

Wie bereits weiter oben erwähnt, ist es besonders überraschend, dass unter Verwendung einer Gesamtmenge an dem oder den erfindungsgemäßen Alkamiden, die (noch) nicht ausreicht, den Speichelfluss zu verstärken, die unangenehmen Geschmackseindrücke eines unangenehm schmeckenden Stoffes oder Stoffgemisches (wie weiter oben definiert) stark verändert, insbesondere maskiert und/oder vermindert werden. Dementsprechend werden als bevorzugte Zubereitungen erfindungsgemäße Zubereitungen angegeben, bei denen die in der Zubereitung enthaltene Gesamtmenge an dem oder den erfindungsgemäßen Alkamiden nicht ausreicht, den Speichelfluss zu verstärken. Insbesondere die weiter oben als bevorzugt genannten Alkamide, ganz besonders aber erfindungsgemäße Alkamide der Formel (1) eigneten sich in den oben genannten Ausführungsformen einer erfindungsgemäßen Zubereitung überraschenderweise besonders gut.

Soweit die vorliegende Erfindung Zubereitungen betrifft, sind diese eine der Ernährung dienende Zubereitung ausgewählt aus der Gruppe bestehend aus auf Soja basierenden Produkten und fettreduzierten Joghurts. Für diese erfindungsgemäßen Produkte gilt dabei das weiter oben für die erfindungsgemäßen Zubereitungen Gesagte entsprechend.

Wie weiter oben erwähnt, sind erfindungsgemäße Verwendungen zu bevorzugen, bei denen erfindungsgemäße Mischungen eingesetzt werden, die ferner einen oder mehrere Aromastoffe (wie oben definiert) umfassen. Die auffallend starke Reduktion des adstringierenden Geschmacks eines wie oben definierten unangenehm schmeckenden Stoffes, insbesondere in auf Soja basierenden Produkten und fettreduzierten Joghurts, war dabei besonders überraschend. Auch hierbei war der weiter oben beschriebene synergistische Effekt durch die Kombination mit einem oder mehreren Aromastoffen deutlich zu beobachten.

Wie bereits erwähnt sind insbesondere die Aromastoffe hervorzuheben, die einen milchig-sahnigen und Mundfülle gebenden Geschmackseindruck vermitteln (wie z.B. Diacetyl, Acetoin oder delta-Lactone) und Aromastoffe, die einen süss-karamelligen Geschmackseindruck vermitteln, der ein Zuckerprofil unterstützt (wie z.B. Maltol, Vanillin, Benzaldehyd, Furaneol, Heliotropin).

Im Einzelnen sind zudem folgende Aromastoffe bevorzugt zu nennen: Diacetyl, Acetoin, Benzaldehyd, Furaneol, Heliotropin, Vanillin, Ethylvanillin, Ethylvanillinisobutyrat (= 3-Ethoxy-4-isobutyryloxybenzaldehyd), Furaneol® (2,5-Dimethyl-4-hydroxy-3(2H)-furanon) und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalalcton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd.

Dementsprechend werden gemäß einem weiteren Aspekt der vorliegenden Erfindung wie oben definierte Zubereitungen angegeben, die zudem einen oder mehrere Aromastoffe umfassen, die einen milchig-sahnigen und Mundfülle gebenden und/oder einen süß-karamelligen Geschmackseindruck vermitteln sowie ein oder mehrere Lösungsmittel mit einem festen oder flüssigen Trägerstoff, Hilfsstoffe und/oder Stabilisierungsmittel.

Besonders geeignet sind dabei die Zubereitungen, bei denen die enthaltene Menge an dem oder den Aromastoffen die den unangenehmen Geschmackseindruck maskierende oder vermindernde Wirkung des oder der Alkamide synergistisch verstärkt. Auch hierbei gilt das weiter oben Gesagte entsprechend. Auch bei dieser bevorzugten Ausführung der Zubereitung wurde beobachtet, dass bereits beim Einsatz geringer Gesamtmengen des oder der verwendeten Alkamide eine sehr starke Wirkung im Sinne der erfindungsgemäßen Verwendung erzielt werden kann. Auch für die Auswahl des bzw. der verwendeten Alkamide sowie des oder der eingesetzten Aromastoffe in den bevorzugten Ausführungsformen der erfindungsgemäßen Zubereitungen gilt das weiter oben Gesagte entsprechend.

Die oben beschriebenen erfindungsgemäßen Zubereitungen, umfassend einen oder mehrere Aromastoffe (wie oben definiert), stellen dementsprechend erfindungsgemäße Aromakompositionen dar.

Nach einem weiteren Aspekt im Zusammenhang mit der vorliegenden Erfindung ist eine hierin beschriebene Zubereitung dadurch gekennzeichnet, dass sie als Halbfertigware, als Riech-, Aroma- oder Geschmacksstoffkomposition oder als Würzmischung vorliegt.

Bevorzugt ist eine erfindungsgemäße Zubereitung, die neben einem erfindungsgemäßen Alkamid oder einer Mischung (wie oben definiert) zumindest eine weitere Substanz zum Verändern, Maskieren oder Vermindern des unangenehmen Geschmackseindrucks eines unangenehm schmeckenden Stoffes oder Stoffgemisches umfasst. Entsprechend liegt dann eine Kombination von zumindest zwei Geschmackskorrigenzien vor.

Betreffend der bevorzugten Auswahl der zumindest einen weiteren Substanz verweisen wir auf die Ausführungen weiter unten.

Überraschenderweise wurde gefunden, dass die erfindungsgemäßen Zubereitungen, die ein oder mehrere Alkamide in sehr geringen Konzentrationen umfassen (d.h. deutlich unter 10 ppm, bevorzugt unter 2 ppm, besonders bevorzugt unter 1 ppm, und wenigstens 0,01 ppm, bevorzugt wenigstens 0,05 ppm), den unangenehmen Geschmackseindruck, insbesondere den adstringierenden Geschmackseindruck einer Vielzahl von Stoffen oder Anwendungen, insbesondere von Quercitrin, Rutin, Phloridzin, Gallus- oder Elagsäureester von Kohlenhydraten (z.B. Pentagalloylglucose), ggfs. galloylierte Catechine, Gallocatechine, Epigallocatechine oder Epicatechine, Proanthyocyanidine oder Procyanidine, Thearubigenin, Quercetin, Taxifolin, Myricetin, γ-Oryzanol, Kaffeesäure oder deren Ester (z.B. Chlorogensäure und Isomere), metallische Salze (insbesondere Aluminiumsalze, Zinksalze, Eisen-(II)-salze), adstringierend schmeckenden Peptiden oder Proteinen (insbesondere Peptide mit einer Aminosäure aus der Gruppe Leucin, Isoleucin, Valin, Tryptophan, Prolin oder Phenylalanin am N- oder C-Terminus), Saponinen, insbes. Sojasaponinen und Isoflavonoiden (insbes. Genistein, Daidzein, Genistin, Daidzin, deren Glycoside und acylierten Glycoside), künstliche Süßstoffe oder Zuckeraustauschstoffe (insbes. Aspartam, Acesulfam K, Saccharin, Sucralose, Tagatose, Cyclamat u.a.) in einer Vielzahl von Anwendungen wie z.B. Kakao-haltigen Produkten, Schwarz- oder Grüntee-haltigen Produkten, Traubenkernextrakt-haltigen Produkten, Rotwein enthaltenden Produkten, fettreduzierten oder fettfreien Milchprodukten wie Joghurt oder Käse, fettreduzierten Fettprodukten auf Emulsionsbasis wie Mayonnaise, Margarine, auf Soja basierenden Anwendungen (z.B. Sojamilch, Sojaproteinhaltigen Getränken, Soja-Eis etc., Tofu), kalorienreduzierten Produkten mit künstlichen Süßstoffen und Zuckeraustauschstoffen (z.B. Getränke, Milchprodukte, Süßwaren, etc) reduzieren oder sogar vollständig unterdrücken können, wobei es besonders vorteilhaft ist, dass die erfindungsgemäß verwendeten Alkamide in den sehr geringen Konzentrationen nahezu keinen Eigengeschmack, insbesondere nahezu keinen kribbelnden oder scharfen oder betäubenden sensorischen Eindruck mehr besitzen und die weiteren, in der Regel nicht unangenehmen Geschmacksqualitäten nicht negativ, insbesondere den süßen Geschmack von süßen Stoffen sogar positiv beeinflussen. Durch den beschriebenen Effekt wird das Mundgefühl in den entsprechenden Anwendungen wesentlich verbessert

Dementsprechend sind erfindungsgemäße Zubereitungen besonders bevorzugt, die bezogen auf ihr Gesamtgewicht weniger als 10 ppm, vorzugsweise weniger als 2 ppm, besonders bevorzugt weniger als 1 ppm und wenigstens 0,01 ppm, bevorzugt wenigstens 0,05 ppm des bzw. der Alkamide (wie weiter oben definiert) enthalten.

Die vorstehend genannten bevorzugten Konzentrationsbereiche der Alkamide gelten auch für die weiter oben beschriebenen Ausführungsformen erfindungsgemäßer Verwendungen.

Es ist bevorzugt, wenn die erfindungsgemäße der Ernährung dienende Zubereitung bezogen auf ihr Gesamtgewicht weniger als 10 ppm, vorzugsweise weniger als 2 ppm und besonders bevorzugt weniger als 0,5 ppm und wenigstens 0,01 ppm, bevorzugt wenigstens 0,05 ppm des bzw. der Alkamide (wie weiter oben definiert) enthält.

Pharmazeutische Zubereitungen, die hierin im Zusammenhang mit der vorliegenden Erfindung beschrieben werden, umfassen einen pharmazeutischen Wirkstoff. Vorteilhafte pharmazeutische Wirkstoffe sind beispielsweise steroidale entzündungshemmende Substanzen vom Kortikosteroiden-Typ wie z.B. Hydrocortison, Hydrocortison-Derivate wie Hydrocortison-17-butyrat, Dexamethason, Dexamethasonphosphat, Methylprednisolon oder Cortison.

Vorteilhafte nichtsteroidale pharmazeutische Wirkstoffe sind beispielsweise Entzündungshemmer wie Oxicame wie Piroxicam oder Tenoxicam; Salicylate wie Aspirin® (Acetylsalicylsäure), Disalcid, Solprin oder Fendosal; Essigsäure-Derivate wie Diclofenac, Fenclofenac, Indomethacin, Sulindac, Tolmetin, oder Clindanac; Fenamate wie Mefenamic, Meclofenamic, Flufenamic oder Niflumic; Propionsäure-Derivate wie Ibuprofen, Naproxen, Flurbiprofen, Benoxaprofen oder Pyrazole wie Phenylbutazon, Oxyphenylbutazon, Febrazon oder Azapropazon.

Besonders bevorzugte pharmazeutische Zubereitungen sind nicht verschreibungspflichtige Produkte und frei verkäufliche Arzneimittel, sogenannte OTC ("over the counter") -Präparate, enthaltend Wirkstoffe wie Paracetamol, Acetylsalicylsäure oder Ibuprofen, Vitamine (beispielsweise Vitamin H, Vitamine aus der B-Reihe wie Vitamin B1, B2, B6, B12, Niacin, Panthotensäure, vorzugsweise in Form von (Brause-)Tabletten oder Kapseln), Mineralien (vorzugsweise in Form von (Brause-)Tabletten oder Kapseln) wie Eisensalze, Zinksalze, Selensalze, Produkte enthaltend Wirkstoffe oder Extrakte von Spitzwegerich (z.B. in Hustensirup) oder Johanniskraut.

Hierin beschriebene der Ernährung oder dem Genuss dienende Zubereitungen sind z.B. Backwaren (z.B. Brot, Trockenkekse, Kuchen, sonstiges Gebäck), Süßwaren (z.B. Schokoladen, Schokoladenriegelprodukte, sonstige Riegelprodukte, Fruchtgummi, Hart- und Weichkaramellen, Kaugummi), alkoholische oder nicht-alkoholische Getränke (z.B. Kakao, Kaffee, Grüntee, Schwarztee, mit (Grün-, Schwarz-)Tee-Extrakten angereicherte (Grün-, Schwarz-)Tee-Getränke, Roibos-Tee, andere Kräutertee, Wein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte, Frucht- oder Gemüsesaftzubereitungen), Instantgetränke (z.B. Instant-Kakao-Getränke, Instant-Tee-Getränke, Instant-Kaffeegetränke), Fleischprodukte (z.B. Schinken, Frischwurst- oder Rohwurstzubereitungen, gewürzte oder marinierte Frisch- oder Pökelfleischprodukte), Eier oder Eiprodukte (Trockenei, Eiweiß, Eigelb), Getreideprodukte (z.B. Frühstückscerealien, Müsliriegel, vorgegarte Fertigreis-Produkte), Milchprodukte (z.B. Vollfett- oder fettreduzierte oder fettfreie Milchgetränke, Milchreis, Joghurt, Kefir, Frischkäse, Weichkäse, Hartkäse, Trockenmilchpulver, Molke, Butter, Buttermilch, teilweise oder ganz hydrolisierte Milchprotein-haltige Produkte), Produkte aus Sojaprotein oder anderen Sojabohnen-Fraktionen (z.B. Sojamilch und daraus gefertigte Produkte, isoliertes oder enzymatisch behandeltes Sojaprotein enthaltende Getränke, Sojamehl enthaltende Getränke, Sojalecithin-haltige Zubereitungen, fermentierte Produkte wieTofu oder Tempe oder daraus gefertigte Produkte und Mischungen mit Fruchtzubereitungen und fakultativ Aromen), Fruchtzubereitungen (z.B. Konfitüren, Fruchteis, Fruchtsoßen, Fruchtfüllungen), Gemüsezubereitungen (z.B. Ketchup, Soßen, Trockengemüse, Tiefkühlgemüse, vorgegarte Gemüse, eingekochte Gemüse), Knabberartikel (z.B. gebackene oder fittierte Kartoffelchips oder Kartoffelteigprodukte, Extrudate auf Mais- oder Erdnussbasis), Produkte auf Fett- und

Ölbasis oder Emulsionen derselben (z.B. Mayonnaise, Remoulade, Dressings, jeweils Vollfett- oder fettreduziert), sonstige Fertiggerichte und Suppen (z.B. Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden, Süßstoffzubereitungen, -tabletten oder -sachets, sonstige Zubereitung zum Süßen oder Weißen von Getränken oder anderen Nahrungsmitteln. Die hierin beschriebenen Zubereitungen können auch als Halbfertigware zur Herstellung weiterer der Ernährung oder dem Genuss dienenden Zubereitungen dienen.

Die Zubereitungen im Sinne der Erfindung, welche unangenehm schmeckende Stoffe oder Stoffgemische enthalten, können auch in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, äls Pulver, als Lösungen, als Pasten oder als andere schluck- oder kaubare Zubereitungen vorliegen sowie als Zubereitung mit funktionellen Inhaltsstoffen, als Nahrungsergänzungsmittel oder als bilanzierte Diäten.

Bevorzugt sind adstringierend schmeckende Zubereitungen wie z.B. Kakao, Grüntee, Schwarztee, mit (Grün-, Schwarz-)Tee-Extrakten angereicherte (Grün-, Schwarz-) Tee-Getränke, Roibos-Tee, andere Kräutertees, Wein, weinhaltige Getränke, Ihstantgeträhke (z.B. Instant-Kakao-Getranke, Instant-Tee-Getränke, Instant-Kaffeegetränke), fetfreduzierte oder fettfreie Milchgetränke, Milchreis, Joghurt, Kefir, Frischkäse, Weichkäse, Hartkäse, Trockenmilchpulver, Molke, Butter, Buttermilch, teilweise oder ganz hydrolisierte Milchprotein-haltige Produkte, Produkte aus Sojaprotein oder anderen Sojabohnen-Fraktionen (z.B. Sojamilch und daraus gefertigte Produkte, isoliertes oder enzymatisch behandeltes Sojäprotein enthaltende Getränke, Sojamehl enthaltende-Getränke, Sojalecithin-haltige Zubereitungen, fermentierte Produkte wie Tofu oder Tempe oder daraus gefertigte Produkte und Mischungen mit Fruchtzubereitungen und fakultativ Aromen), fettreduzierte Produkte auf Fett- und Ölbasis oder Emulsionen derselben (z.B. Mayonnaise, Remoulade, Dressings), zusätzlich Süßstoffe enthaltende Produkte wie kalorienreduzierte oder -freie Getränke, vor allem alkoholfreie Erfrischungsgetränke, Instantgetränke, zuckerfreie oder -arme Eiscreme, Milchprodukte, Backwaren, Konfekt, Schokolade, Sojamilch- oder -protein-haltige Produkte.

Wie bereits des öfteren erwähnt sind die oben definierten Zubereitungen gemäß der vorliegenden Erfindung (i) auf Soja basierende Produkte und (ii) fettreduzierte (low-fat) Joghurts wie oben definiert mit adstringierendem Geschmack. In diesen Produkten ist der erfindungsgemäße Maskierungserfolg besonders ausgeprägt.

Der Mundpflege dienende Zubereitungen sind insbesondere Mund- und/oder Zahnpflegemittel wie Zahnpasten, Zahngele, Zahnpulver, Mundwässer, Kaugummis und andere Mundpflegemittel.

Zahnpflegemittel (als Basis für der Mundpflege dienende Zubereitungen), die die eriindungsgemäß zu verwendenden Alkamide enthalten, umfassen im Allgemeinen ein abrasiver System (Schleif- oder Poliermittel); wie z.B. Kieselsäuren, Calciumcarbonate, Calciumphosphate, Alumiuniumoxide und/oder Hydroxylapatite, oberflächenaktive Substanzen wie z.B. Natriumlaurylsulfat, Natriumlaurylsarcosinat und/oder Cocamidopropylbetain, Feuchthaltemitteln wie z.B. Glycerin und/oder Sorbit, Verdickungsmittel, wie z.B. Carboxymethylcellulose, Polyethylenglycole, Carrageenan und/oder Laponite^{®}, Süßstoffe, wie z.B. Saccharin, andere Geschmackskorrigenzien für unangenehme Geschmackseindrücke, Geschmackskorrigenzien für weitere, in der Regel nicht unangenehme Geschmackseindrücke, geschrnacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäüre), Kühlwirkstoffen wie z.B. Menthol, Mentholderivate (z.B. L-Menthol, L-Menthyllactat, L-Menthylalkylcarbonate, Menthonketale, Menthancarbonsäureamide), 2,2,2-Trialkylessigsäureamiden (z.B. 2,2-Diisopropylpropionsäuremethylamid), Icilin-Derivate, Stabilisatoren und aktive Wirkstoffe, wie z.B. Natriumfluorid, Natriummonofluorphosphat, Zinndifluorid, quartären Ammoniumfluoriden, Zinkcitrat, Zinksulfat, Zinnpyrophosphat, Zinndichlorid, Mischungen verschiedener Pyrophosphate, Triclosan, Cetylpyridiniumchlorid, Aluminiumlactat, Kaliumcitrat, Kaliumnitrat, Kaliumchlorid, Strontiumchlorid, Wasserstoffperoxid, Aromen und/oder Natriumbicarbonat oder Geruchskorrigenzien.

Kaugummis (als weiteres Beispiel für der Mundpflege dienende Zubereitungen), welche erfindungsgemäß zu verwendende Alkamide enthalten, umfassen im allgemeinen eine Kaugummibase, d.h. eine beim Kauen plastisch werdende Kaumasse, Zucker verschiedener Arten, Zuckeraustauschstoffe, Süßstoffe, Zuckeralkoholen, andere Geschmackskorrigenzien für unangenehme Geschmackseindrücke, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), die im vorherigen Abschnitt genannten Kühlwirkstoffe, Feuchthaltemittel, Verdicker, Emulgatoren, Aromen und Stabilisatoren oder Geruchskorrigenzien.

Bevorzugt können die erfindungsgemäßen Zubereitungen auch eine Aromakomposition enthalten, um den Geschmack und/oder Geruch der Zubereitung abzurunden und zu verfeinem. Geeignete Aromakompositionen enthalten z.B. synthetische, natürliche oder naturidentische Aroma-, Riech- und Geschmacksstoffe sowie geeignete Hilfs- und Trägerstoffe.

Als weitere Bestandteile für erfindungsgemäße Zubereitungen können übliche Grund-, Hilfs- und Zusatzstoffe für Nahrungs- oder Genussmittel verwendet werden. Einige dieser Substanzen besitzen einen unangenehmen Geschmack im Sinne der eingangs gegebenen Definition.

Weitere übliche Wirk-, Grund-, Hilfs- und Zusatzstoffe für der Ernährung, der Mundpflege oder dem Genuss dienende Zubereitungen können in Mengen von 5 bis 99,999999 Gew.-%, vorzugsweise 10 bis 80 Gew.-%, bezogen auf das Gesamtgewicht der Zubereitung, enthalten sein. Ferner können die Zubereitungen Wasser in einer Menge bis zu 99,999999 Gew.-%, vorzugsweise 5 bis 80 Gew.%, bezogen auf das Gesamtgewicht der Zubereitung, aufweisen.

Beispiele üblicher Grund-, Hilfs- und Zusatzstoffe für erfindungsgemäße Zubereitungen sind Wasser, Gemische frischer oder prozessierter, pflanzlicher oder tierischer Grund- oder Rohstoffe (z.B. rohes, gebratenes, getrocknetes, fermentierte, geräuchertes und/oder gekochtes Fleisch, Knochen, Knorpel, Fisch, Gemüse, Früchte, Kräuter, Nüsse, Gemüse- oder Fruchtsäf te oder -pasten oder deren Gemische), verdauliche oder nicht verdauliche Kohlenhydrate (z.B. Saccharose, Maltose, Fructose, Glucose, Dextrine, Amylose, Amylopektin, Inulin, Xylane, Cellulose), Zuckeralkohole (z.B. Sorbit), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z.B. Kaliumstearat), proteinogene oder nicht-proteinogene Aminosäuren und verwandte Verbindungen (z.B. Taurin), Peptide, native oder prozessierte Proteine (z.B. Gelatine), Enzyme (z.B. Peptidasen), Nukleinsäuren, Nucleotide, andere als die erfindungsgemäß verwendeten Geschmackskorrigenzien für unangenehme Geschmackseindrücke (z. B. Hesperetin, Phloretin oder andere gemäß US 2008/0227867 zu verwendende Hydroxychalkonderivate sowie gegebenenfalls die dort beschriebenen Lactone), Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Emulgatoren (z.B. Lecithine, Diacylglycerole), Stabilisatoren (z.B. Carageenan, Alginat), Konservierungsstoffe (z.B. Benzoesäure, Sorbinsäure), Antioxidantien (z.B. Tocopherol, Ascorbinsäure), Chelatoren (z.B. Citronensäure), organische oder anorganische Säuerungsmittel (z.B. Äpfelsäure, Essigsäure, Citronensäure, Weinsäure, Phosphorsäure, Milchsäure), zusätzliche Bitterstoffe (z.B. Chinin, Coffein, Limonin, Amarogentin, Humolone, Lupolone, Catechine, Tannine), Süßstoffe (z.B. Saccharin, Cyclamat, Aspartam, Neotam, Stevioside, Rebaudioside, Acesulfam K, Neohesperidindihydrochalkon, Thaumatin, Superaspartam), mineralische Salze (z.B. Natriumchlorid, Kaliumchlorid, Magnesiumchlorid, Natriumphosphate), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, trigeminal (das heißt scharfe, stechende, prickelnde, kratzende, adstringierende, Wärme- oder Kälte-Effekte verursachende) wirksame Stoffe oder Pflanzenextrakte, enthaltend solche trigeminal wirksamen Stoffe, synthetische, natürliche oder naturidentische Aromastoffe oder Riechstoffe sowie Geruchskorrigenzien.

Des Weiteren betrifft die vorliegende Erfindung ein Verfahren zum Maskieren oder Vermindern des unangenehmen Geschmackseindrucks eines unangenehm schmeckenden Stoffes oder Stoffgemisches. Dabei wird ein unangenehm schmeckender Stoff (wie oben definiert) mit einem Alkamid und/oder einer Mischung umfassend oder bestehend aus zwei oder mehr unterschiedlichen Alkamiden (wie weiter oben definiert) vermischt. Für die Auswahl des oder der Alkamide bzw. der erfindungsgemäßen Mischungen sowie der unangenehm schmeckenden Stoffe gilt das weiter oben Gesagte entsprechend.

In einer besonders bevorzugten Ausführungsform werden bei dem oben erwähnten Verfahren das bzw. die Alkamide (wie oben definiert) mit einem unangenehm schmeckenden Stoff vermischt, der einen adstringierenden Geschmack (wie weiter oben definiert) aufweist.

Die beschriebenen erfindungsgemäßen Zubereitungen, umfassend eines oder mehrere der erfindungsgemäß verwendeten Alkamide, werden vorzugsweise hergestellt, indem die Alkamide als Substanzen, als Lösung oder in Form eines Aromagemisches in eine der Ernährung dienende Basis-Zubereitung eingearbeitet werden. Vorteilhafterweise können als Lösung vorliegende erfindungsgemäße Zubereitungen auch z.B. durch Sprühtrocknung in eine feste Zubereitung überführt werden.

Gemäß einer weiteren bevorzugten Ausführungsform werden zur Herstellung erfindungsgemäßer Zubereitungen das bzw. die erfindungsgemäß verwendeten Alkamide und gegebenenfalls andere Bestandteile der erfindungsgemäßen Zubereitung in Form von Emulsionen, in Liposomen, z.B. ausgehend von Phosphatidylcholin, in Microsphären, in Nanosphären oder auch in Kapseln, Granulaten oder Extrudaten aus einer für Lebens- und Genussmittel geeigneten Matrix, z.B. aus Stärke, Stärkederivaten, Cellulose oder Cellulosederivaten (z.B. Hydroxypropylcellulose), anderen Polysacchariden (z.B. Alginat), natürlichen Fetten, natürlichen Wachsen (z.B. Bienenwachs, Carnaubawachs) oder aus Proteinen, z.B. Gelatine, eingearbeitet. In einem bevorzugten Herstellungsverfahren werden die erfindungsgemäß zu verwendenden Alkamide oder Mischungen vor dem Einarbeiten mit einem oder mehreren geeigneten Komplexbildnern, beispielsweise mit Cycloglycanen, z.B. Cyclofructanen, Cyclodextrinen oder Cyclodextrinderivaten, bevorzugt α-, γ- und □-Cyclodextrin, komplexiert und in dieser komplexierten Form eingesetzt.

Besonders bevorzugt ist eine erfindungsgemäße Zubereitung, bei der die Matrix so gewählt wird, dass die erfindungsgemäß zu verwendenden Alkamide verzögert von der Matrix freigegeben werden, so dass man eine langanhaltende Wirkung erhält.

### Beispiele

Die Beispiele dienen zur Verdeutlichung der Erfindung, ohne den Schutzbereich der Patentansprüche einzuschränken. Prozentangaben beziehen sich auf das Gewicht, sofern nicht anders angegeben.

### Anwendungsbeispiel 1: Aromakompositionen flüssig

| | Zubereitung (Einsatz in Gew.-%) | | | | | | | |
|---|---|---|---|---|---|---|---|---|
| Inhaltsstoff | A | B | C | D | E | F | G | H |
| 10 Gew.-% trans-Pellitorin in 1,2-Propylenglycol/ Diethylmalonat | 1 | 0,6 | 1 | 0,55 | 1,95 | 1 | 0,25 | 1,6 |
| Hesperetin | 2 | - | - | 2 | - | - | - | - |
| Symrise Zucker Aroma in Propylenglycol-1,2 | 1,5 | 4 | - | - | 2 | - | 0,3 | - |
| Symrise Milch Aroma in Propylenglycol-1,2 | - | - | - | 4 | - | - | - | - |
| Symrise Sahne Aromain Propylenglycol-1,2 | | - | 3 | 0,3 | 0,5 | 5 | 1 | 2,5 |
| Propylenglycol | Ad 100 | - | Ad 100 | Ad 100 | Ad 100 | Ad 100 | - | Ad 100 |
| Ethanol | - | ad 100 | - | - | - | - | Ad 100 | - |

Die Stoffe bzw. Lösungen werden in den oben angegebenen Mengenverhältnissen gemischt und dann mit Propylenglycol oder Ethanol aufgenommen und durch leichtes Erwärmen vollständig gelöst und homogen gemischt.

### Anwendungsbeispiel 2: Aromakompositionen trocken

| | Zubereitung (Einsatz in Gew.-%) | | | | | | | |
|---|---|---|---|---|---|---|---|---|
| Inhaltsstoff | A | B | C | D | E | F | G | H |
| Ca. 1,3 Gew.-% Pellitorin sprühgetrocknet | 25 | 15 | 0,5 | 1 | 1 | 0,25 | 1,2 | 6 |
| Ca. 10 Gew-% Homoeriodictiol sprühgetrocknet | - | - | 35 | 50 | 45 | 15 | 13 | 50 |
| Ca 10 Gew.-% Hesperetin sprühgetrocknet | | - | - | - | 10 | 10 | 6 | - |
| Symrise Abrundungs-aroma für Tee sprühgetrocknet | - | - | 1 | - | 30 | 5 | - | - |
| Symrise Zucker Aroma in Triacetin | 8 | 5 | 0,5 | - | - | - | - | - |
| Symrise Vanille sprühgetrocknet | - | - | - | - | - | - | 3 | 10 |
| Dextrose wasserfrei | - | Ad 100 | - | - | - | Ad 100 | - | - |
| Maltodextrin | Ad 100 | - | Ad 100 | Ad 100 | Ad 100 | - | Ad 100 | Ad 100 |

Die Stoffe werden in den oben angegebenen Mengenverhältnissen gemischt und mit den festen Trägerstoffen homogen gemischt.

### Anwendungsbeispiel 3: Sprühgetrocknete Aromakompositionen als Halbfertigwaren zur Aromatisierung von Fertigwaren

| | Zubereitung (Einsatz in Gew.-%) | | | | | |
|---|---|---|---|---|---|---|
| Inhaltsstoff | A | B | C | D | E | F |
| Maltodextrin aus Weizen | 24,3 | 24,3 | 24,3 | 24,3 | 24,3 | 24,3 |
| Gummi Arabicum | 6,1 | 6,1 | 6,1 | 6,1 | 6,1 | 6,1 |
| Trans-Pellitorin | 0,1 | 0,08 | 0,04 | 0,06 | 0,1 | 0,1 |
| Symrise Zucker Aroma in Triacetin | - | 0,5 | 0,2 | - | 0,1 | - |
| Symrise Sahne Aroma in Triacetin | - | - | - | 0,05 | 0,05 | - |
| Symrise Milch Aroma in Triacetin | - | - | - | - | - | 0,1 |
| Trinkwasser | ad 100 | ad 100 | ad 100 | ad 100 | ad 100 | ad 100 |

Das Trinkwasser wird in einem Behälter vorgelegt und das Maltodextrin und das Gummi Arabicum darin gelöst. Anschließend werden Bestandteile mit einem Mixer (Turrax) in die oben beschriebene Trägerstofflösung emulgiert. Die Temperatur des resultierenden Gemisches sollte 30°C nicht überschreiten. Das Gemisch wird dann sprühgetrocknet (Solltemperatur Eingang: 185 - 195°C, Solltemperatur Ausgang: 70 - 75°C). Analog können auch sprühgetrocknete Zubereitungen mit erfindungsgemäßen anderen Aromakompositionen hergestellt werden.

### Anwendungsbeispiel 4: Aromamischungen zur Reduktion der unangenehmen Geschmackseindrücke in einer Süßstoffmischung zur Süßung von Kakao-, Kaffee- oder Tee-haltigen Getränken

### Vergleichszubereitung (A)

### Erfindungsgemäße Zubereitung enthaltend erfindungsgemäße Aromakompositionen (B-D)

| | Zubereitung (Angaben als Gew.-%) | | | |
|---|---|---|---|---|
| Inhaltsstoff | A | B | C | D |
| Saccharin | 1,50 | 1,50 | 1,50 | 1,50 |
| Aromakomposition nach Anwendungs-beispiel 2 B | - | 1,7 | - | 0,6 |
| Aromakomposition nach Anwendungs-beispiel 2 A | - | - | - | 1,00 |
| Aromakomposition nach Anwendungs-beispiel 3 B | - | - | 1,00 | - |
| Sorbitol | ad 100 | ad 100 | ad 100 | ad 100 |

Die Zubereitungen A-D werden mit 1 % auf schwarzen Kaffee (frisch gebrüht) dosiert.

Verglichen mit Zubereitung A (Vergleich) war in Zubereitung B - D die Adstringens und die langanhaltende Süße vermindert. Die metallischen Noten wurden zudem reduziert. Zubereitung D hatte zudem einen Sucrose-typischeren Geschmack.

### Anwendungsbeispiel 5: Verwendung in einer Süßstoffmischung zur Süßung von fettreduzierten, fettarmen bzw. fettfreien Milchprodukten (z.B. Eis, Joghurt, ...) zur Reduktion der unangenehmen Geschmackseindrücke

### Vergleichszubereitung (A)

### Erfindungsgemäße Zubereitung enthaltend erfindungsgemäße Aromakompositionen (B-D)

| | Zubereitung (Angaben als Gew.-%) | | | |
|---|---|---|---|---|
| Inhaltsstoff | A | B | C | D |
| Aromakomposition nach Anwendungs-beispiel 1 E | - | 0,03 | - | - |
| Aromakomposition nach Anwendungs-beispiel 1 A | - | - | - | 0,08 |
| Aromakomposition nach Anwendungs-beispiel 1 H | - | - | 0,03 | - |
| Acesulfam K | 0,01 | 0,01 | 0,01 | 0,01 |
| Aspartam | 0,02 | 0,02 | 0,02 | 0,02 |
| Joghurt natur, 0,1% Fett | ad 100 | ad 100 | ad 100 | ad 100 |

Die Aromakompositionen sowie die Süßstoffe werden mit dem neutralen 0,1% Fett-haltigen Joghurt verrührt. Die Mischungen erfordern eine Reifezeit von 3 Tagen.

Verglichen mit Zubereitung A (Vergleich) war in Zubereitung B - D die Adstringens und die langanhaltende Süße vermindert. Die metallischen Noten wurden zudem reduziert. In Zubereitung C wurde eine deutlich stärkere Mundfülle erreicht (an Sucrose erinnernd).

### Anwendungsbeispiel 6: Verwendung in einem Sojamilch-Getränk

### Vergleichszubereitung (A)

### Erfindungsgemäße Zubereitung enthaltend erfindungsgemäße Aromakompositionen (B-H)

| | Zubereitung (Angaben als Gew.-%) | | | | | | | |
|---|---|---|---|---|---|---|---|---|
| Inhaltsstoff | A | B | C | D | E | F | G | H |
| Aromakomposition nach Anwendungs-beispiel 3A | 0,015 | - | - | - | - | - | - | - |
| Aromakomposition nach Anwendungs-beispiel 1 G | - | - | 0,1 | - | - | - | - | - |
| Aromakomposition nach Anwendungs-beispiel 1 F | - | 0,04 | - | - | - | - | - | - |
| Aromakomposition nach Anwendungs-beispiel 1 C | - | - | - | 0,01 | - | - | 0,005 | - |
| Aromakomposition nach Anwendungs-beispiel 1 A | - | - | - | - | - | 0,1 | - | - |
| Aromakomposition nach Anwendungs-beispiel 1 D | - | - | - | - | 0,15 | - | 0,1 | - |
| Aromakomposition nach Anwendungs-beispiel 3 E | - | - | - | - | - | - | - | 0,015 |
| Sojamilch, ohne Zusätze (lokaler Supermarkt) | ad 100 | ad 100 | ad 100 | ad 100 | ad 100 | ad 100 | ad 100 | ad 100 |

Die Aromakompositionen werden mit der neutralen Sojamilch gemischt. Die Mischungen erfordern eine Reifezeit von 5-6 Tagen.

Verglichen mit Zubereitung A (Vergleich) war in Zubereitung B - H die Adstringens der Sojamilch vermindert. In Zubereitung B - D, sowie G+H wurde die Mundfülle der Sojamilch deutlich verbessert, die Soja-bohnigen Noten wurden reduziert. In Zubereitung E+F wurde neben der Adstringens besonders die Bitterkeit der Sojamilch reduziert.

### Anwendungsbeispiel 7: Verwendung in einem Soja-Getränk in Kombination mit γ -Aminobuttersäure

γ-Aminobuttersäure wurde in Wasser vorgelöst und zusammen mit einer Aromamischung (Pellitorin-haltig) zu einer Sojamilch aus einem lokalen Supermarkt hinzugefügt. Die Mischung wurde zusammen mit dem Milcharoma im Becherglas verrührt.

| **Inhaltsstoff** | **Einsatz in Gew.-%** |
|---|---|
| Sojamilch, ohne Zusätze (lokaler Supermarkt) | 99,76 |
| Aromakomposition nach Anwendungsbeispiel 1 F | 0,04 |
| 1 % γ-Aminobuttersäure in Wasser | 0,2 |

Im Vergleich zu Anwendungsbeispiel 6 B wurde die Adstringens deutlich reduziert, die Sojamilch erhält eine sehr neutrale Frische.

### Anwendungsbeispiel 8: Verwendung in einem Soja-Frucht-Getränk

### Vergleichszubereitung (A)

### Erfindungsgemäße Zubereitung enthaltend erfindungsgemäße Aromakompositionen (B-D)

| | Zubereitung (Angaben als Gew.-%) | | | |
|---|---|---|---|---|
| Inhaltsstoff | A | B | C | D |
| Aromakomposition nach Anwendungs-beispiel 1 D | - | 0,12 | 0,1 | - |
| Aromakomposition nach Anwendungs-beispiel 1 A | - | - | - | 0,08 |
| Aromakomposition nach Anwendungs-beispiel 1 C | - | - | 0,003 | - |
| Süßstoffmix | 0,03 | 0,03 | 0,03 | 0,03 |
| Zucker | 5 | 5 | 5 | 5 |
| Fruchtsaftmix aus Fruchtsaftkon-zentraten | 50 | 50 | 50 | 50 |
| Wasser | ad 100 | ad 100 | ad 100 | ad 100 |
| Sojapulver | 5 | 5 | 5 | 5 |

Die Aromakompositionen werden mit den restlichen Zutaten gemischt. Die Mischung wird homogenisiert und anschließend pasteurisiert (15 Min. bei 80-85°C).

Verglichen mit Zubereitung A (Vergleich) waren in Zubereitung B - D die Adstringens und die Soja-bohnigen Noten vermindert. In Zubereitung B wurde zudem die Bitterkeit deutlich reduziert. Alle Proben hatten einen deutlich fruchtigeren Angeschmack.

### Anwendungsbeispiel 9: Verwendung in einer Sojaeiscreme

### Vergleichszubereitung (A)

### Erfindungsgemäße Zubereitung enthaltend erfindungsgemäße Aromakompositionen (B-D)

| | Zubereitung (Angaben als Gew.-%) | | | |
|---|---|---|---|---|
| Inhaltsstoff | A | B | C | D |
| Aromakomposition nach Anwendungs-beispiel 1 F | - | 0,06 | - | - |
| Aromakomposition nach Anwendungs-beispiel 1 G | - | - | - | 0,12 |
| Aromakomposition nach Anwendungs-beispiel 1 C | - | - | 0,014 | - |
| Sojaeiscreme-Mix (mit 12% Saccharos, 8% Glucofructose Sirup, 3% Sojapul-ver, 4,5% Fett) | ad 100 | ad 100 | ad 100 | ad 100 |

Die Aromakompositionen werden mit dem Eiscrememix gemischt. Anschließend wird die Masse im Freezer mit einem Aufschlag von 100% gefroren und bei -25°C gelagert.

Verglichen mit Zubereitung A (Vergleich) waren in Zubereitung B - D die Soja-bohnigen Noten deutlich reduziert.

### Anwendungsbeispiel 10: Verwendung in einem fettfreien Joghurt

### Vergleichszubereitung (A)

### Erfindungsgemäße Zubereitung enthaltend, erfindungsgemäße Aromakompositionen (B-D)

| | Zubereitung (Angaben als Gew.-%) | | | |
|---|---|---|---|---|
| Inhaltsstoff | A | B | C | D |
| Aromakomposition nach Anwendungs-beispiel 1 F | - | 0,03 | - | - |
| Aromakomposition nach Anwendungs-beispiel 1 G | - | - | - | 0,1 |
| Aromakomposition nach Anwendungs-beispiel 3 F | - | - | 0,015 | - |
| Sucrose | 5 | 5 | 5 | 5 |
| Joghurt natur, 0,1% Fett | ad 100 | ad 100 | ad 100 | ad 100 |

Die Aromakompositionen sowie die Sucrose werden mit dem neutralen 0, 1 % Fett-haltigen Joghurt verrührt. Die Mischungen erfordern eine Reifezeit von 3 Tagen.

Verglichen mit Zubereitung A (Vergleich) war in Zubereitung B - D die Adstringens vermindert. Zudem wurde die Säure des Joghurts vermindert. In Zubereitung D wurde eine deutlich stärkere Mundfülle erreicht.

### Anwendungsbeispiel 11: Verwendung in einer fettreduzierten Mayonnaise

| **Inhaltsstoff** | **Einsatz in Gew.-%** |
|---|---|
| Fettreduzierte Mayonnaise | 99,93 |
| Aromakomposition nach Anwendungsbeispiel 1 F | 0,07 |

Im Vergleich zu fettreduzierter Mayonnaise ohne Aromakomposition wurde die Adstringens verbessert, die Zubereitung erhielt ein besseres Mundgefühl/Fettigkeit.

### Anwendungsbeispiel12: Grüntee-Zubereitungen

| **Inhaltsstoff** | **Einsatz in Gew.-%** | |
|---|---|---|
| | **A** | **B** |
| Grüntee-Extrakt, ca. 16% Catechingehalt | 0,25 | 0,25 |
| Aromakomposition nach Anwendungsbeispiel 2 D | 0,1 | - |
| Aromakomposition nach Anwendungsbeispiel 2 E | - | 0,1 |
| Süßstoffmischung (Aspartam, Sucralose 1:1) | 0,01 | 0,01 |
| Äpfelsäure, Citronensäure | 0,1 | 0,1 |
| Demineralisiertes Wasser | ad 100 | ad 100 |

Der Grünteextrakt, Säure und Süßstoffmischung sowie die Aromakompositionen wurden in 80 ° heißem Wasser gelöst und in Flaschen abgefüllt.

Im Vergleich zur Kontroll-Grüntee-Zubereitung (ohne Aromakomposition) wurde die Adstringens reduziert. Die Bitterkeit war zudem besonders in Zubereitung B reduziert; Zubereitung B zeigte eine deutlich vollere Süße.

### Anwendungsbeispiel 13: Verwendung in einer bitteren Schokolade

| **Inhaltsstoff** | **Einsatz in Gew.-%** |
|---|---|
| Bitterschokolade, min. 85 % Kakao (Handelsprodukt) | 99,7 |
| Aromakomposition nach Anwendungsbeispiel 2 G | 0,3 |

Die Zutaten wurden in die bei 40°C geschmolzene Schokolade eingearbeitet und die flüssige Masse in Tafelform gegossen und nach dem dem Fachmann bekannten Temperungsverfahren abgekühlt, wobei man eine Essschokolade erhält.

Die so zubereitete Schokolade wurde von den trainierten Fachleuten als weniger bitter, weniger adstringierend und insgesamt als mehr abgerundet bezeichnet.

## Patentansprüche

1. Verwendung
- eines einzelnen Alkamids
und/oder
- einer Mischung umfassend oder bestehend aus zwei oder mehr unterschiedlichen Alkamiden,
wobei das einzelne Alkamid bzw. eines, mehrere oder sämtliche der Alkamide in der Mischung ausgewählt sind aus der Gruppe bestehend aus 2E,4E-Decadiensäure-N-isobutylamid (trans-Pellitorin), 2E,4Z- Decadiensäure-N-isobutylamid (cis-Pellitorin); 2Z,4Z-Decadiensäure-N-isobutylamid; 2Z,4E-Decadiensäure-N-isobutylamid; 2E,4E-Decadiensäure-N-([2S]-2-methylbutyl)amid; 2E,4E-Decadiensäure-N-([2S]-2-methylbutyl)amid; 2E,4E-Decadiensäure-N-([2R]-2-methylbutylamid); 2E,4Z-Decadiensäure-N-(2-methylbutyl)amid; 2E,4E-Decadiensäure-N-piperid (Achilleamid); 2E,4E-Decadiensäure-N-piperid (Sarmentin); 2E-Decensäure-N-isobutylamid; 3E-Decensäure-N-isobutylamid; 3E-Nonensäure-N-isobutylamid; 2E,6Z,8E-Decatriensäure-N-isobutylamid (Spilanthol); 2E,6Z,8E-Decatriensäure-N-([2S]-2-methylbutyl)amid (Homospilanthol); 2E,6Z,8E-Decatriensäure-N-([2R]-2-methylbutyl)amid; 2E-Decen-4-insäure-N-isobutylamid; 2Z-Decen-4-insäure-N-isobutylamid; 2E,6Z,8E,10E-Dodecatetraensäure-N-(2-methylpropyl)amid (α-Sanshool); 2E,6Z,8E,10E-Dodecatetraensäure-N-(2-hydroxy-2-methylpropyl)amid (α-Hydroxysanshool); 2E,6E,8E,10E-Dodecatetraensäure-N-(2-hydroxy-2-methylpropyl)amid (γ-Hydroxysanshool); 2E,4E,8Z,10E,12E-Tetradecapentaensäure-N-(2-hydroxy-2-methylpropyl)amid (γ-Hydroxysanshool); 2E,4E,8E,10E,12E-Tetradecapentaensäure-N-(2-hydroxy-2-methylpropyl)amid (γ-Hydroxyisosanshool); 2E,4E,8Z,10E,12E-Tetradecapentaensäure-N-(2-methyl-2-propenyl)amid (γ-Dehydrosanshool); 2E,4E,8Z,10E,12E-Tetradecapentaensäure-N-(2-methylpropyl)amid (γ-Sanshool); 2E,4E,8Z,11Z-Tetradecatetraensäure-N-(2-hydroxy-2-methylpropyl)amid (Bungeariool); 2E,4E,8Z,11E-Tetradecatetraensäure-N-(2-hydroxy-2-methylpropyl)amid (Isobungeanool); 2E,4E,8Z-Tetradecatriensäure-N-(2-hydroxy-2-methylpropyl)amid (Dihydrobungeanool) und 2E,4E-Tetradecadiensäure-N-(2-hydroxy-2-methylpropyl)amid (Tetrahydrobungeanool),
zum Maskieren oder Vermindern des unangenehmen Geschmackseindrucks eines unangenehm schmeckenden Stoffes oder Stoffgemisches.

2. Verwendung nach Anspruch 1, **dadurch gekennzeichnet dass** das Alkamid bzw. die Alkamide jeweils unabhängig voneinander ausgewählt sind aus der Gruppe, bestehend aus 2E,4E-Decadiensäure-N-isobutylamid (trans-Pellitorin), 2E,4Z-Decadiensäure-N-isobutylamid (cis-Pellitorin), 2Z,4Z-Decadiensäure-N-isobutylamid, 2Z,4E-Decädiensäure-N-isobutylamid, 2E,4E-Decadiensäure-N-piperid (Achilleamid), 2E,6Z,8E-Decatriensäure-N-isobutylamid (Spilanthol), 2E,6Z,8E-Decatriensäure-N-([2S]-2-methylbutyl)amid (Homospilanthol), 2E,6Z,8E-Decatriensäure-N-([2R]-2-methylbutyl)amid, 2E,6Z,8E,10E-Dodecatetraensäure-N-(2-mefhylpropyl)amid (α-Sanshool), 2E,6Zn8E,10E-Dodecatetraensäure-N-(2-hydroxy-2-methylpropyl)amid (α-Hydroxysanshool), 2E,4E,8Z,10E,12E-Tetradecapentaensäure-N-(2-methylpropyl)amid (γ-Sanshool) und 2E,4E,8Z,11Z-Tetradecatetraensäure-N-(2-hydroxy-2-methylpropyl)amid (Bungeanool).

3. Verwendung nach Anspruch 1, **dadurch gekennzeichnet dass** das Alkamid bzw. die Alkamide jeweils unabhängig voneinander ausgewählt sind aus der Gruppe bestehend aus 2E,4E-Decadiensäure₋N-isobutylamid (trans-Pellitorin) der Formel (1), 2E,4Z-Decadiensäure-N-isobutylamid (cis-Pellitorin) der Formel (2), 2Z,4Z-Decadiensäure-N-isobutylamid der Formel (3) und 2Z,4E- Decadiensäure-N-isobutylamid der Formel (4):

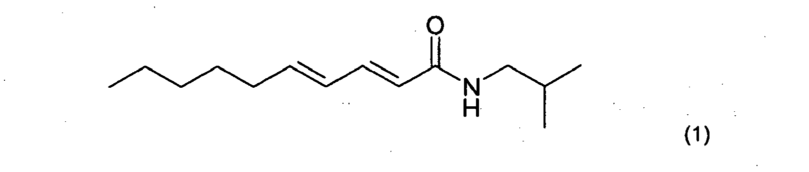

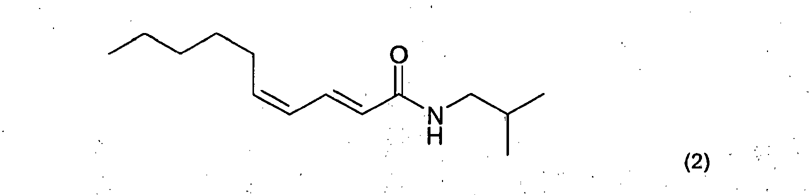

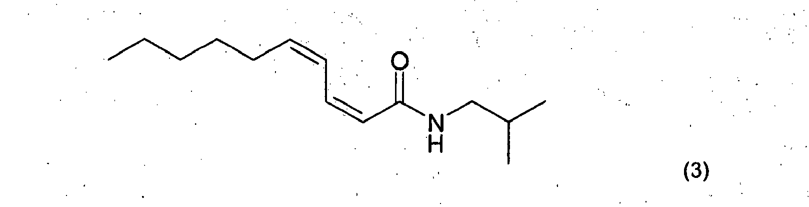

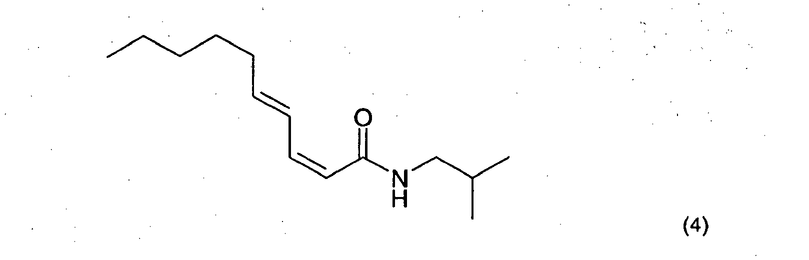

4. Verwendung nach einem der vorhergehenden Ansprüche zum Maskieren oder Vermindern eines adstringierenden Geschmacks eines unangenehm schmeckenden Stoffes oder Stoffgemisches mit einem, zwei, drei, vier, fünf oder sämtlichen der Geschmackseindrücke adstringierend, trocken, staubig, mehlig, kalkig oder metallisch.

5. Verwendung nach einem der vorangehenden Ansprüche in einer zur oralen Aufnahme bestimmten pharmazeutischen oder einer der Ernährung, der Mundpflege oder dem Genuss dienenden Zubereitung.

6. Zubereitung, umfassend
a)
- ein Alkamid
und/oder
- eine Mischung umfassend oder bestehend aus zwei oder mehr unterschiedlichen Alkamiden
wie in einem der Ansprüche 1 bis 3 definiert
und
b) ein oder mehrere unangenehm schmeckende Stoffe,
wobei
die Menge des bzw. der unangenehm schmeckenden Stoffe ausreicht, um in einer Vergleichszubereitung, die kein Alkamid wie in einem der Ansprüche 1 bis 3 definiert umfasst, aber ansonsten identisch zusammengesetzt ist, als unangenehme Geschmack wahrgenommen zu werden, und die Menge des bzw. der Alkamide wie in einem der Ansprüche 1 bis 3 definiert in der Zubereitung ausreicht, um im Vergleich mit der Vergleichszubereitung den unangenehmen Geschmackseindruck des unangenehm schmeckenden Stoffes sensorisch zu maskieren oder zu vermindern,
**dadurch gekennzeichnet, dass** die Zubereitung eine der Ernährung dienende Zubereitung ausgewählt ist aus der Gruppe bestehend aus auf Soja basierenden Produkten und fettreduzierten Joghurts.

7. Zubereitung nach Anspruch 6, wobei der oder die unangenehm schmeckenden Stoffe einen, zwei, drei, vier, fünf oder sämtliche der Geschmackseindrücke adstringierend, trocken, staubig, mehlig, kalkig oder metallisch aufweisen.

8. Zubereitung nach einem der Ansprüche 6 bis 7, zudem umfassend
- einen oder mehrere Aromastoffe, die einen milchig-sahnigen und Mundfülle gebenden und/oder einen süss-karamelligen Geschmackseindruck vermitteln
sowie
- ein oder mehrere Lösungsmittel mit einem festen oder flüssigen Trägerstoff, Hilfsstoffe und/oder Stabilisierungsmittel.

9. Zubereitung nach einem der Ansprüche 6 bis 8, **dadurch gekennzeichnet, dass** sie als Halbfertigware, als Riech-, Aroma- oder Geschmacksstoffkomposition oder als Würzmischung vorliegt.

10. Zubereitung nach einem der Ansprüche 6 bis 9, ferner umfassend zumindest eine weitere Substanz zum Verändern, Maskieren oder Vermindern des unangenehmen Geschmackseindrucks eines unangenehm schmeckenden Stoffes oder Stoffgemisches.

11. Zubereitung nach einem der Ansprüche 6 bis 10, vorzugsweise Zubereitung nach Anspruch 9, **dadurch gekennzeichnet, dass** die Zubereitung, bezogen auf ihr Gesamtgewicht, weniger als 10 ppm, vorzugsweise weniger als 2 ppm, und wenigstens 0,01 ppm des bzw. der Alkamide wie in einem der Ansprüche 1 bis 3 definiert enthält.

12. Verfahren zum Maskieren oder Vermindern des unangenehmen Geschmackseindrucks eines unangenehm schmeckenden Stoffes oder Stoffgemisches, umfassend den Schritt des Vermischens eines unangenehm schmeckenden Stoffes oder Stoffgemisches mit
- einem Alkamid
und/oder
- einer Mischung umfassend oder bestehend aus zwei oder mehr unterschiedlichen Alkamiden
wie in einem der Ansprüche 1 bis 3 definiert.

13. Verfahren nach Anspruch 12 **dadurch gekennzeichnet, dass** der unangenehm schmeckende Stoff ein Stoff mit einem adstringierenden Geschmack ist.

## Claims

1. Use of
- a single alkamide
and/or
- a mixture comprising or consisting of two or more different alkamides,
wherein the single alkamide or one, several or all of the alkamide(s) in the mixture are selected from the group consisting of 2E,4E-decadienic acid-N-isobutylamide (trans-pellitorin), 2E,4Z-decadienic acid-N-isobutylamide (cis-pellitorin); 2Z,4Z-decadienic acid-N-isobutylamide; 2Z,4E-decadienic acid-N-isobutylamide; 2E,4E-decadienic acid-N-([2S]-2-methylbutyl)amide; 2E,4E-decadienic acid-N-([2S]-2-methylbutyl)amide; 2E,4E-decadienic acid-N-([2R]-2-methylbutylamide); 2E,4Z-decadienic acid-N-(2-methylbutyl)amide; 2E,4E-decadienic acid-N-piperide (achilleamid); 2E,4E-decadienic acid-N-piperide (sarmentin); 2E-decadienic acid-N-isobutylamide; 3E-decadienic acid-N-isobutylamide; 3E-nonenic acid-N-isobutylamide; 2E,6Z,8E-decatrienic acid-N-isobutylamide (spilanthol); 2E,6Z,8E-decatrienic acid-N-([2S]-2-methylbutyl)amide (homospilanthol); 2E,6Z,8E-decatrienic acid-N-([2R]-2-methylbutyl)amide; 2E-decen-4-inic acid-N-isobutylamide; 2Z-decen-4-inic acid-N-isobutylamide; 2E,6Z,8E,10E-dodecatetraenic acid-N-(2-methylpropyl)amide (α-sanshool); 2E,6Z,8E,10E-dodecatetraenic acid-N-(2-hydroxy-2-methylpropyl)amide (α-hydroxysanshool); 2E,6E,8E,10E-dodecatetraenic acid-N-(2-hydroxy-2-methylpropyl)amide (γ-hydroxysanshool); 2E,4E,8Z,10E, 12E-tetradecapentaenic acid-N-(2-hydroxy-2-methylpropyl)amide (γ-hydroxysanshool); 2E,4E,8E,10E,12E-tetradecapentaenic acid-N-(2-hydroxy-2-methylpropyl)amide (γ-hydroxyisosanshool); 2E,4E,8Z, 10E, 12E-tetradecapentaenic acid-N-(2-methyl-2-propenyl)amide (γ-dehydrosanshool); 2E,4E,8Z,10E,12E-tetradecapentaenic acid-N-(2-methylpropyl)amide (γ-sanshool); 2E,4E,8Z,11Z-tetradecatetraenic acid-N-(2-hydroxy-2-methylpropyl)amide (bungeanool); 2E,4E,8Z,11E-tetradecatetraenic acid-N-(2-hydroxy-2-methylpropyl)amide (isobungeanool); 2E,4E,8Z-tetradecatrienic aicd-N-(2-hydroxy-2-methylpropyl)amide (dihydrobungeanool) and 2E,4E-tetradecadienic acid-N-(2-hydroxy-2-methylpropyl)amide (tetrahydrobungeanool),
for masking or reducing an unpleasant taste impression of an unpleasant tasting substance or substance mixture.

2. Use according to claim 1, **characterized in that** the alkamide or the alkamides are, in each case independently of each other, selected from the group consisting of 2E,4E-decadienic acid-N-isobutylamide (trans-pellitorin), 2E,4Z-decadienic acid-N-isobutylamide (cis-pellitorin), 2Z,4Z-decadienic acid-N-isobutylamide, 2Z,4E-decadienic acid-N-isobutylamide, 2E,4E-decadienic aicd-N-piperide (achilleamide), 2E,6Z,8E-decatrienic acid-N-isobutylamide (spilanthol), 2E,6Z,8E-decatrienic acid-N-([2S]-2-methylbutyl)amide (homospilanthol), 2E,6Z,8E-decatrienic acid-N-([2R]-2-methylbutyl)amide, 2E,6Z,8E,10E-dodecatetraenic acid-N-(2-methylpropyl)amide (α-sanshool), 2E,6Z,8E,10E-dodecatetraenic acid-N-(2-hydroxy-2-methylpropyl)amide (α-hydroxysanshool), 2E,4E,8Z,10E,12E-tetradecapentaenic acid-N-(2-methylpropyl)amide (γ-sanshool) and 2E,4E,8Z,11Z-tetradecatetraenic acid-N-(2-hydroxy-2-methylpropyl)amide (bungeanool).

3. Use according to claim 1, **characterized in that** the alkamide or the alkamides are, in each case independently of each other, selected from the group consisting of 2E,4E-decadienic acid-N-isobutylamide (trans-pellitorin) of formula (1), 2E,4Z-decadienic acid-N-isobutylamide (cis-pellitorin) of formula (2), 2Z,4Z-decadienic aicd-N-isobutylamide of formula (3) and 2Z,4E- decadienic acid-N-isobutylamide of formula (4):

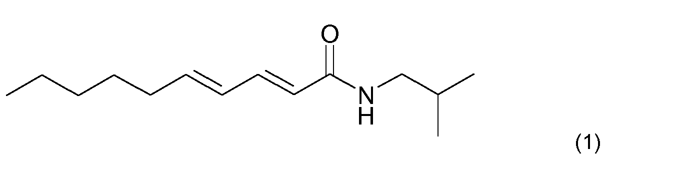

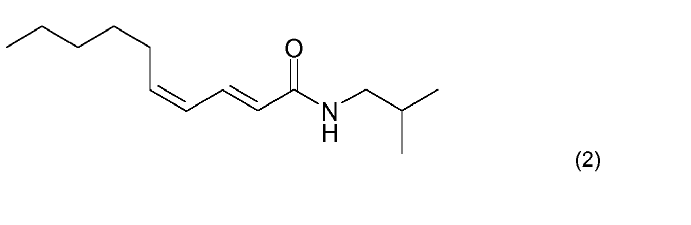

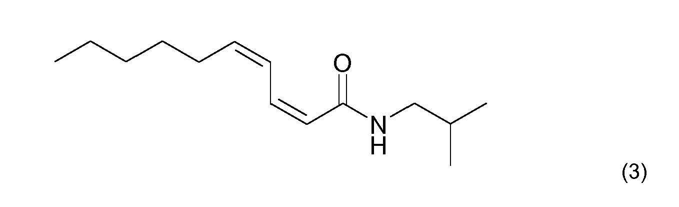

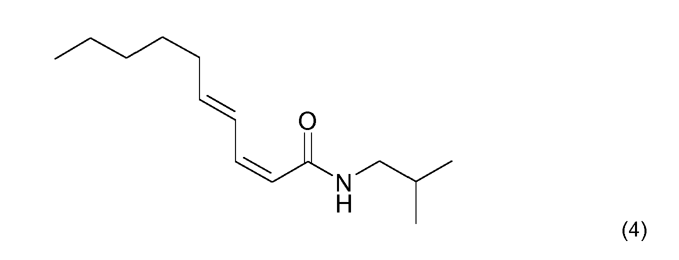

4. Use according to one of the preceding claims for masking or reducing an astringent taste of an unpleasant tasting substance or substance mixture with one, two, three, four, fife or all of the taste impressions astringent, dry, dusty, floury, chalky or metallic.

5. Use according to one of the preceding claims in a pharmaceutical preparation or a preparation for nutrition, oral care or pleasure intended for oral intake.

6. Preparation, comprising
a)
- an alkamide
and/or
- a mixture comprising or consisting of two or more different alkamides as defined in one of the claims 1 to 3
and
b) one or more unpleasant tasting substances,
wherein
the amount of the unpleasant tasting substance(s) is sufficient to be perceived as an unpleasant taste in a comparative preparation, which does not comprise an alkamide as defined in one of the claims 1 to 3 but is otherwise composed identically, and the amount of the alkamide(s) as defined in one of the claims 1 to 3 is sufficient to sensorically mask or reduce the unpleasant taste impression of the unpleasant tasting substance compared to the comparative preparation,
**characterized in that** the preparation is a preparation of nutrition selected from the group consisting of soy based products and fat reduced yoghurts.

7. Preparation according to claim 6, wherein the unpleasant tasting substances have one, two, three, four, fife or all of the taste impressions astringent, dry, dusty, floury, chalky or metallic.

8. Preparation according to one of claims 6 to 7, additionally comprising
- one or more aroma substances, which convey a milky-creamy and mouth filling and/or a sweet-caramelly taste impression
as well as
- one or more solvent(s) with a solid or liquid carrier, excipient and/or stabilizing agent.

9. Preparation according to one of claims 6 to 8, **characterized in that** it is present as a semi-finished product, fragrance, aroma or flavor composition or as a spice mixture.

10. Preparation according to one of claims 6 to 9, further comprising at least one further substance for modifying, masking or reducing of the unpleasant taste impression of an unpleasant tasting substance or substance mixture.

11. Preparation according to one of claims 6 to 10, preferably preparation according to claim 9, **characterized in that** the preparation, with respect to its total weight, comprises less than 10 ppm, preferably less than 2 ppm, and at least 0.01 ppm of the alkamide(s) as defined in one of the claims 1 to 3.

12. Method for masking or reducing the unpleasant taste impression of an unpleasant tasting substance or substance mixture, comprising the step of mixing of an unpleasant tasting substance or substance mixture with
- an alkamide
and/or
- a mixture comprising or consisting of two or more different alkamides
as defined in one of claims 1 to 3.

13. Method according to claim 12, **characterized in that** the unpleasant tasting substance is a substance with an astringent taste.

## Revendications

1. Utilisation
- d'un seul alcamide
et/ou
- d'un mélange comprenant ou se composant de deux alcamides différents ou plus,
ledit seul alcamide ou bien un, plusieurs ou l'ensemble des alcamides dans le mélange étant choisis dans le groupe constitué par le N-isobutylamide de l'acide 2E,4E-décadiénique (trans-pellitorine); le N-isobutylamide de l'acide 2E,4Z-décadiénique (cis-pellitorine); le N-isobutylamide de l'acide 2Z,4Z-décadiénique, le N-isobutylamide de l'acide 2Z,4E-décadiénique; le N-([2S]-2-méthylbutyl)amide de l'acide 2E,4E-décadiénique; le N-([2S]-2-méthylbutyl)amide de l'acide 2E,4E-décadiénique; le N-([2R]-2-méthylbutylamide) de l'acide 2E,4E-décadiénique; le N-(2-méthylbutyl)amide de l'acide 2E,4Z-décadiénique; le N-pipéride de l'acide 2E,4E-décadiénique (achilléamide); le N-pipéride de l'acide 2E,4E-décadiénique (sarmentin); le N-isobutylamide de l'acide 2E-décénoïque; le N-isobutylamide de l'acide 3E-décénoïque; le N-isobutylamide de l'acide 3E-nonéique; le N-isobutylamide de l'acide 2E,6Z,8E-décatriénique (spilanthol); le N-([2S]-2-méthylbutyl)amide de l'acide 2E,6Z,8E-décatriénique (homospilanthol); le N-([2R]-2-méthylbutyl)amide de l'acide 2E,6Z,8E-décatriénique; le N-isobutylamide de l'acide 2E-décén-4-inique; le N-isobutylamide de l'acide 2Z-décén-4-inique; le N-(2-méthylpropyl)amide de l'acide 2E,6Z,8E,10E-dodécatétraénique (α-sanshool); le N-(2-hydroxy-2-méthylpropyl)amide de l'acide 2E,6Z,8E,10E-dodécatétraénique (α-hydroxysanshool); le N-(2-hydroxy-2-méthylpropyl)amide de l'acide 2E,6E,8E,10E-dodécatétraénique (γ-hydroxysanshoo!); le N-(2-hydroxy-2-méthylpropyl)amide de l'acide 2E,4E,8Z,10E,12E-tétradécapentaénique (γ-hydroxysanshool); le N-(2-hydroxy-2-méthylpropyl)amide de l'acide 2E,4E,8E,10E,12E-tétradécapentaénique (γ-hydroxyisosanshool); le N-(2-méthyl-2-propényl)amide de l'acide 2E,4E,8Z,10E,12E-tétradécapentaénique (γ-déhydrosanshool); le N-(2-méthylpropyl)amide de l'acide 2E,4E,8Z,10E,12E-tétradécapentaénique (γ-sanshool); le N-(2-hydroxy-2-méthylpropyl)amide de l'acide 2E,4E,8Z,11Z-tétradécatétraénique (bungéanool); le N-(2-hydroxy-2-méthylpropyl)amide de l'acide 2E,4E,8Z,11E-tétradécatétraénique (isobungéanool); le N-(2-hydroxy-2-méthylpropyl)amide de l'acide 2E,4E,8Z-tétradécatriénique (dihydrobungéanool) et le N-(2-hydroxy-2-méthylpropyl)amide de l'acide 2E,4E-tétradécadiénique (tétrahydrobungéanool),
pour masquer ou réduire l'impression gustative désagréable d'une substance ou d'un mélange de substances ayant un goût désagréable.

2. Utilisation selon la revendication 1, **caractérisée par le fait que** l'alcamide ou bien les alcamides sont choisis chacun, indépendamment les uns des autres, dans le groupe constitué par le N-isobutylamide de l'acide 2E,4E-décadiénique (transpellitorine), le N-isobutylamide de l'acide 2E,4Z-décadiénique (cis-pellitorine), le N-isobutylamide de l'acide 2Z,4Z-décadiénique, le N-isobutylamide de l'acide 2Z,4E-décadiénique, le N-pipéride de l'acide 2E,4E-décadiénique (achilléamide), le N-isobutylamide de l'acide 2E,6Z,8E-décatriénique (spilanthol), le N-([2S]-2-méthylbutyl)amide de l'acide 2E,6Z,8E-décatriénique (homospilanthol), le N-([2R]-2-méthylbutyl)amide de l'acide 2E,6Z,8E-décatriénique, le N-(2-méthylpropyl)amide de l'acide 2E,6Z,8E,10E-dodécatétraénique (a-sanshool), le N-(2-hydroxy-2-méthylpropyl)amide de l'acide 2E,6Z,8E,10E-dodécatétraénique (a-hydroxysanshool), le N-(2-méthylpropyl)amide de l'acide 2E,4E,8Z,10E,12E-tétradécapentaénique (γ-sanshool) et le N-(2-hydroxy-2-méthylpropyl)amide de l'acide 2E,4E,8Z,11Z-tétradécatétraénique (bungéanool).

3. Utilisation selon la revendication 1, **caractérisée par le fait que** l'alcamide ou bien les alcamides sont choisis chacun, indépendamment les uns des autres, dans le groupe constitué par le N-isobutylamide de l'acide 2E,4E-décadiénique (transpellitorine) de la formule (1), le N-isobutylamide de l'acide 2E,4Z-décadiénique (cis-pellitorine) de la formule (2), le N-isobutylamide de l'acide 2Z,4Z-décadiénique de la formule (3) et le N-isobutylamide de l'acide 2Z,4E-décadiénique de la formule (4):

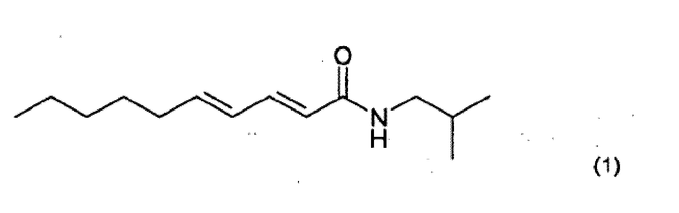

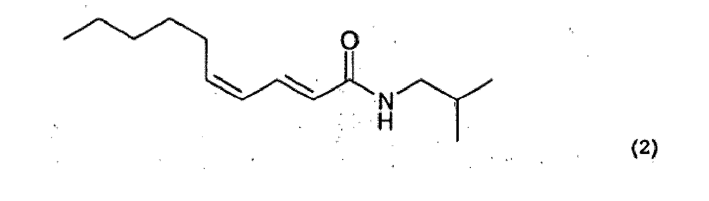

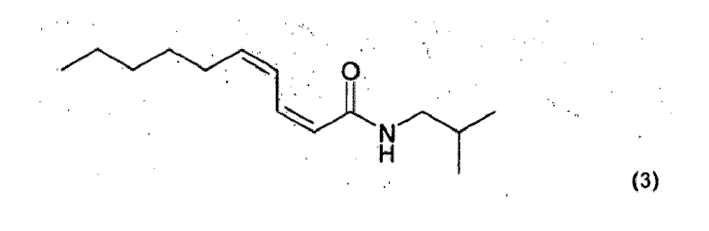

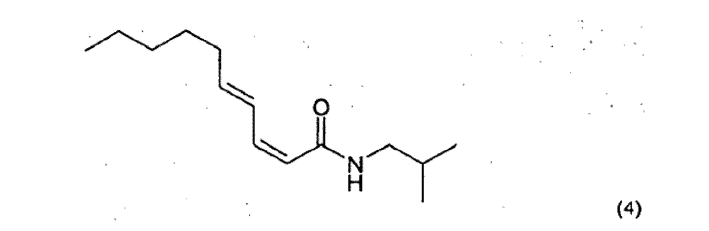

4. Utilisation selon l'une quelconque des revendications précédentes, pour masquer ou réduire un goût astringent d'une substance ou d'un mélange de substances ayant un goût désagréable avec une, deux, trois, quatre, cinq ou l'ensemble des impressions gustatives, à savoir astringente, sèche, poussiéreuse, farineuse, calcaire ou métallique.

5. Utilisation selon l'une quelconque des revendications précédentes, dans une préparation pharmaceutique destinée à être prise par voie orale ou une préparation servant à l'alimentation, à l'hygiène buccale ou à la consommation de luxe.

6. Préparation comprenant
a)
- un alcamide
et/ou
- un mélange comprenant ou se composant de deux alcamides différents ou plus,
tels que définis dans l'une quelconque des revendications 1 à 3
et
b) une ou plusieurs substances ayant un goût désagréable,
dans laquelle
la quantité de la ou bien des substances ayant un goût désagréable suffit pour être perçue(s) comme un goût désagréable dans une préparation comparative qui ne contient pas d'alcamide tel que défini dans l'une quelconque des revendications 1 à 3, mais qui, à part cela, présente une composition identique, et la quantité du ou bien des alcamides tels que définis dans l'une quelconque des revendications 1 à 3, dans la préparation suffit afin de masquer ou réduire de manière sensorielle, par rapport à ladite préparation comparative, l'impression gustative désagréable de la substance ayant un goût désagréable,
**caractérisée par le fait que** la préparation est une préparation servant à l'alimentation, choisie dans le groupe constitué par les produits à base de soja et les yaourts à teneur réduite en matières grasses.

7. Préparation selon la revendication 6, dans laquelle la ou les substances ayant un goût désagréable présentent une, deux, trois, quatre, cinq ou l'ensemble des impressions gustatives, à savoir astringente, sèche, poussiéreuse, farineuse, calcaire ou métallique.

8. Préparation selon l'une quelconque des revendications 6 à 7, comprenant en outre
- une ou plusieurs substances aromatisantes qui confèrent une impression gustative laiteuse-crémeuse et donnant du volume en bouche et/ou une impression gustative sucrée de caramel.
ainsi que
- un ou plusieurs solvants avec un véhicule solide ou liquide, des excipients et/ou des agents stabilisants.

9. Préparation selon l'une quelconque des revendications 6 à 8, **caractérisée par le fait qu'**elle se présente comme produit semi-fini, comme composition de substances odoriférantes, aromatisantes ou de sapidité ou comme mélange d'épices.

10. Préparation selon l'une quelconque des revendications 6 à 9, comprenant en outre au moins une autre substance pour modifier, masquer ou réduire l'impression gustative désagréable d'une substance ou d'un mélange de substances ayant un goût désagréable.

11. Préparation selon l'une quelconque des revendications 6 à 10, de préférence préparation selon la revendication 9, **caractérisée par le fait que** la préparation contient, par rapport à son poids total, moins de 10 ppm, de préférence moins de 2 ppm, et au moins 0,01 ppm du ou bien des alcamides tels que définis dans l'une quelconque des revendications 1 à 3.

12. Procédé pour masquer ou réduire l'impression gustative désagréable d'une substance ou d'un mélange de substances ayant un goût désagréable, comprenant l'étape consistant à mélanger une substance ou un mélange de substances ayant un goût désagréable, avec
- un alcamide
et/ou
- un mélange comprenant ou se composant de deux alcamides différents ou plus
tels que définis dans l'une quelconque des revendications 1 à 3.

13. Procédé selon la revendication 12, **caractérisé par le fait que** la substance ayant un goût désagréable est une substance ayant un goût astringent.
